# EUROPEAN PATENT APPLICATION

(11) **EP 4 564 387 A1**
(43) Date of publication of application: **04.06.2025**
(21) Application number: 23846115.6
(22) Date of filing: 29.06.2023
(51) Int. Cl.: H01G 4/224, H01G 4/30

(54) **MULTILAYER CERAMIC CAPACITOR**

(30) Priority: 27.07.2022 JP 2022119349
(71) Applicant: Murata Manufacturing Co., Ltd., Nagaokakyo-shi, Kyoto 617-8555 (JP)
(72) Inventor: KOJIMA, Takahiro, Nagaokakyo-shi, Kyoto 617-8555 (JP)
(74) Representative: Zimmermann, Tankred Klaus
(86) International application number: PCT/JP2023/024153
(87) International publication number: WO 2024/024382

(57) **Abstract**

The present invention provides a multilayer ceramic capacitor which is capable of suppressing the occurrence of electrochemical migration. A multilayer ceramic capacitor 1 according to one embodiment of the present invention has a hydrophilic part 80 and a hydrophobic part 70 in the surface of a multilayer body 10; the hydrophilic part 80 comprises a first main surface-side hydrophilic part 81 that has a hydroxyl group, a second main surface-side hydrophilic part 82 that has a hydroxyl group, a first lateral surface-side hydrophilic part 83 that has a hydroxyl group, and a second lateral surface-side hydrophilic part 84 that has a hydroxyl group; and the hydrophobic part 70 comprises a first main surface-side hydrophobic part 71 that contains at least one of fluorine and a silicone, a second main surface-side hydrophobic part 72 that contains at least one of fluorine and a silicone, a first lateral surface-side hydrophobic part 73 that contains at least one of fluorine and a silicone, and a second lateral surface-side hydrophobic part 74 that contains at least one of fluorine and a silicone.

## Description

### TECHNICAL FIELD

The present invention relates to a multilayer ceramic capacitor.

### BACKGROUND ART

In recent years, electronic apparatuses such as mobile phones and portable music players have undergone advancements to reduce size and thickness. Therefore, for example, it is also required to reduce the sizes of electronic components built into such electronic apparatuses accordingly. In addition, the environments in which such electronic apparatuses are used are diversified. Therefore, it is desired to improve the reliability of electronic components with respect to the diversified environments.

Under such circumstances, electronic components each having a pair of external electrodes have had an electrochemical migration problem. That is, for each of the electronic components, dew condensation occurs on the surface of each of the electronic components due to a temperature difference or a heat capacity difference between the electronic components and the outside air. Water droplets produced by the dew condensation form a water film connecting the external electrodes on the surface of each of the electronic components, and when a voltage is applied between the external electrodes of each of the electronic components in this state, metal species ionized from the external electrodes dissolve and precipitate in the water film, such that electrochemical migration occurs.

Examples of methods for preventing electrochemical migration include a method in which a silane coupling treatment film is formed on the surface of each of the electronic components by a silane coupling treatment. In order to exhibit high water repellency by the silane coupling agent, it is conceivable to lengthen the linear chain of the silane coupling agent. However, when the length of the linear chain of the silane coupling agent is increased, the steric hindrance due to the linear chain is increased, and thus the interval between the silane coupling agents provided on the surface of each of the electronic components is increased, such that the denseness thereof is lowered. As a result, the effect of suppressing dew condensation becomes insufficient, and dew condensation occurs on the surface of each of the electronic components between the silane coupling agents, such that electrochemical migration occurs due to the above-described generation process.

Therefore, Patent Document 1 proposes a method of suppressing the above-described ion migration by using a perfluoroalkylalkylsilane-based water-repellent treatment agent, that is, a silane coupling agent having F (fluorine) as a functional group. By forming a water-repellent film on the surface of each of the ceramic electronic components using this treatment agent, continuous dew condensation is suppressed, and the occurrence of electrochemical migration is prevented.

### Citation List

### Patent Document

Patent Document 1: PCT International Publication No. WO2002/082480

### DISCLOSURE OF THE INVENTION

### Problems to be Solved by the Invention

However, in ceramic electronic components, the suppression of electrochemical migration is not sufficient with the method described in Patent Document 1. That is, when the silane coupling agent having F as a functional group is used, the steric hindrance due to the linear chain of the silane coupling agent can be reduced, and higher water repellency can be exhibited, but the denseness thereof is not sufficient.

Further, in Patent Document 1, since the water-repellent treatment is performed only by adding the water-repellent agent, and the hydrophilic treatment is not performed on the portion to which the water-repellent agent is not added, the difference in the contact angle of water between the portion to which the water-repellent agent is added and the portion to which the water-repellent agent is not added is small, and thus the water-repellent effect may not be sufficiently obtained.

An object of the present invention is to provide multilayer ceramic capacitors that are each able to suppress the occurrence of electrochemical migration.

### Means for Solving the Problems

A multilayer ceramic capacitor according to the present invention includes: a multilayer body including a plurality of dielectric layers that are laminated, a first main surface and a second main surface opposed to each other in a height direction, a first lateral surface and a second lateral surface opposed to each other in a width direction orthogonal to the height direction, and a first end surface and a second end surface opposed to each other in a length direction orthogonal to the height direction and the width direction; first internal electrode layers that are each on a corresponding one of the plurality of dielectric layers and each exposed at the first end surface; second internal electrode layers that are each on a corresponding one of the plurality of dielectric layers and each exposed at the second end surface; a first external electrode on the first end surface; and a second external electrode on the second end surface, in which the multilayer body includes a surface including at least a hydrophilic portion and at least a hydrophobic portion, in which the hydrophilic portion includes a first main surface-side hydrophilic portion that is on at least a portion of the first main surface and has a hydroxyl group, a second main surface-side hydrophilic portion that is on at least a portion of the second main surface and has a hydroxyl group, a first lateral surface-side hydrophilic portion that is on at least a portion of the first lateral surface and has a hydroxyl group, and a second lateral surface-side hydrophilic portion that is on at least a portion of the second lateral surface and has a hydroxyl group, and in which the hydrophobic portion includes a first main surface-side hydrophobic portion that is on at least a portion of the first main surface and includes fluorine or silicone, a second main surface-side hydrophobic portion that is on at least a portion of the second main surface and includes fluorine or silicone, a first lateral surface-side hydrophobic portion that is on at least a portion of the first lateral surface and includes fluorine or silicone, and a second lateral surface-side hydrophobic portion that is on at least a portion of the second lateral surface and includes fluorine or silicone.

### Effects of the Invention

According to the present invention, it is possible to provide multilayer ceramic capacitors that are each able to suppress the occurrence of electrochemical migration.

### BRIEF DESCRIPTION OF THE DRAWINGS

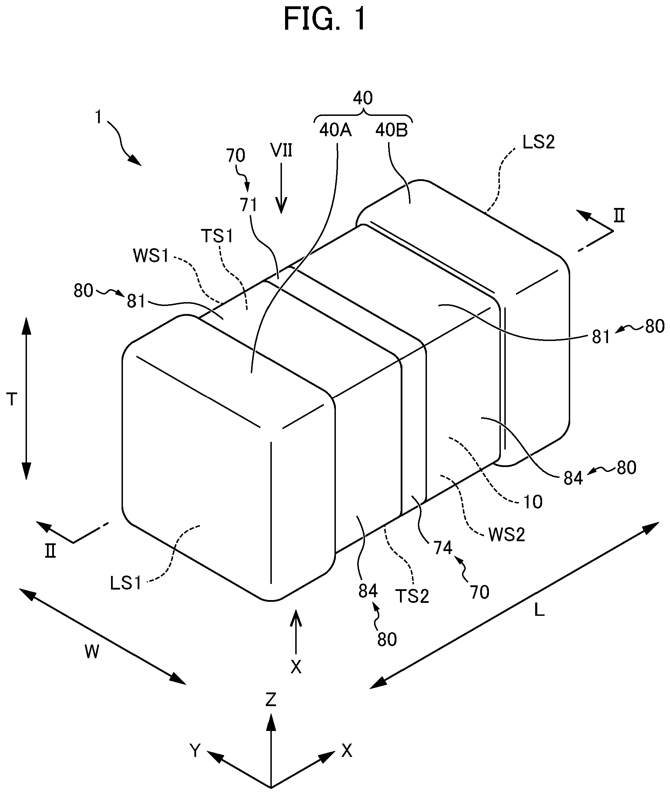

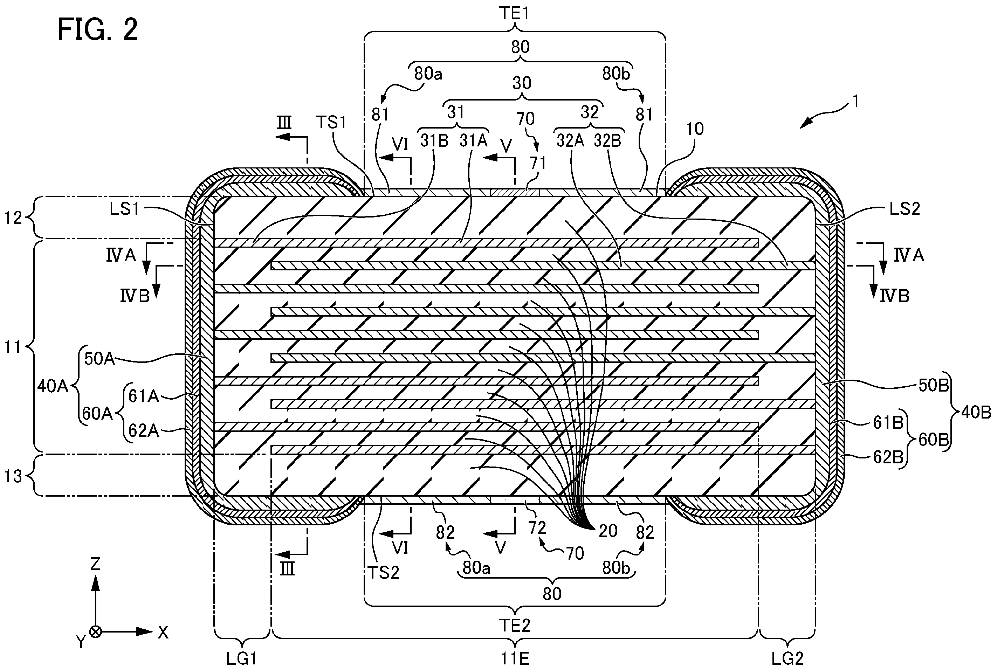

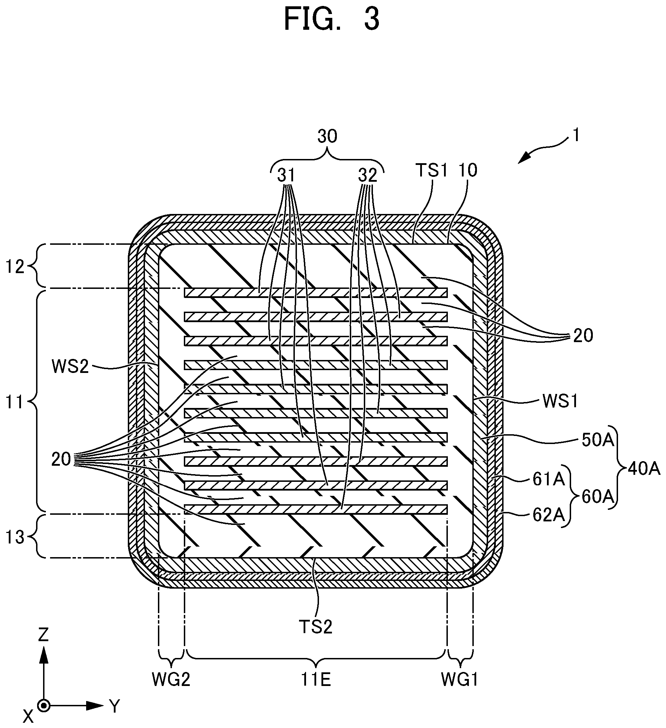

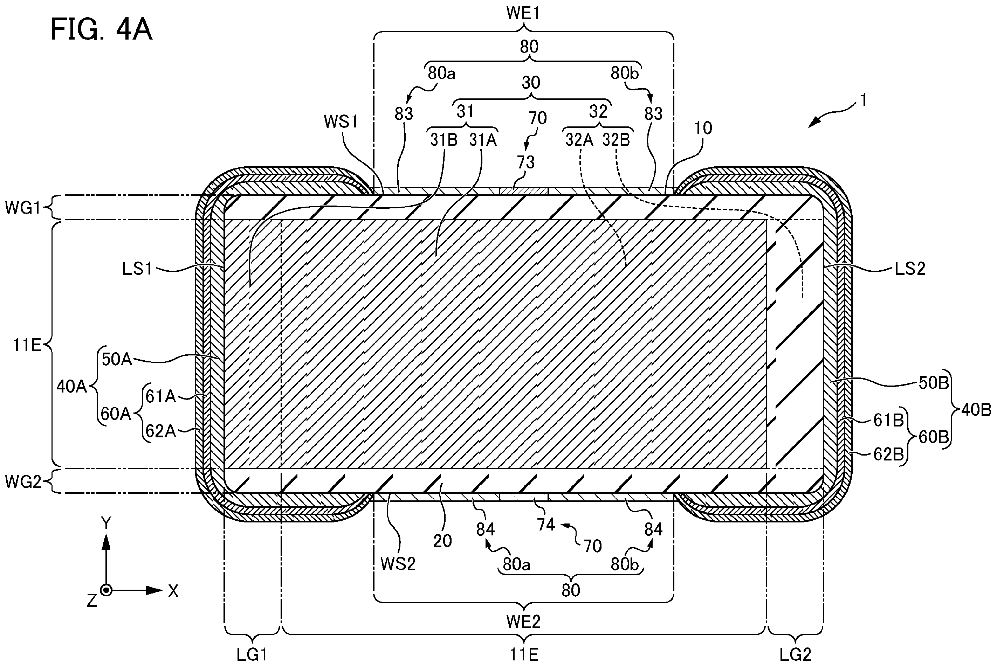

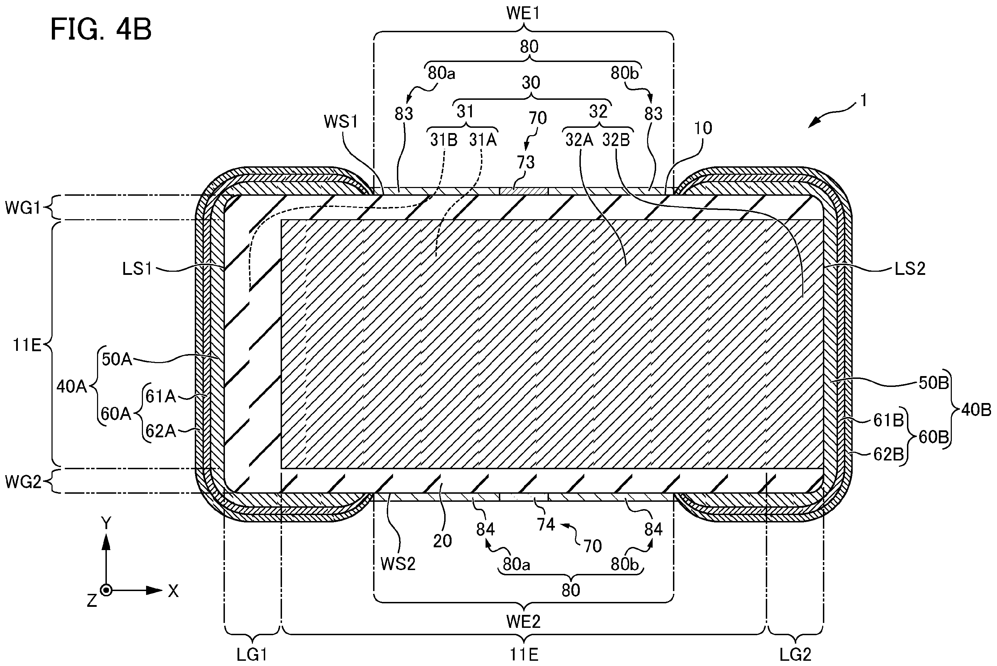

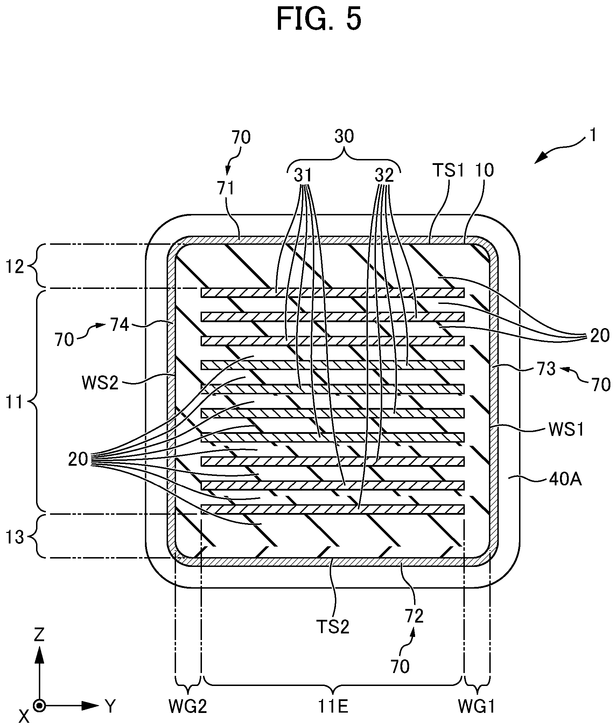

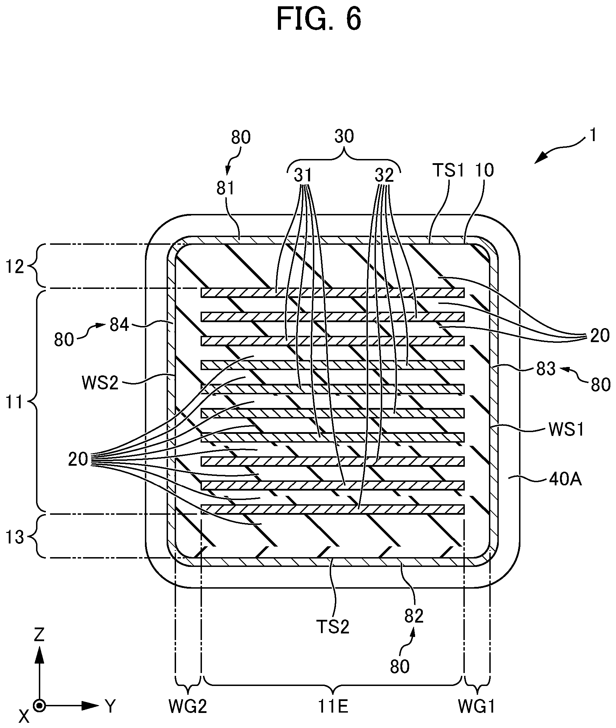

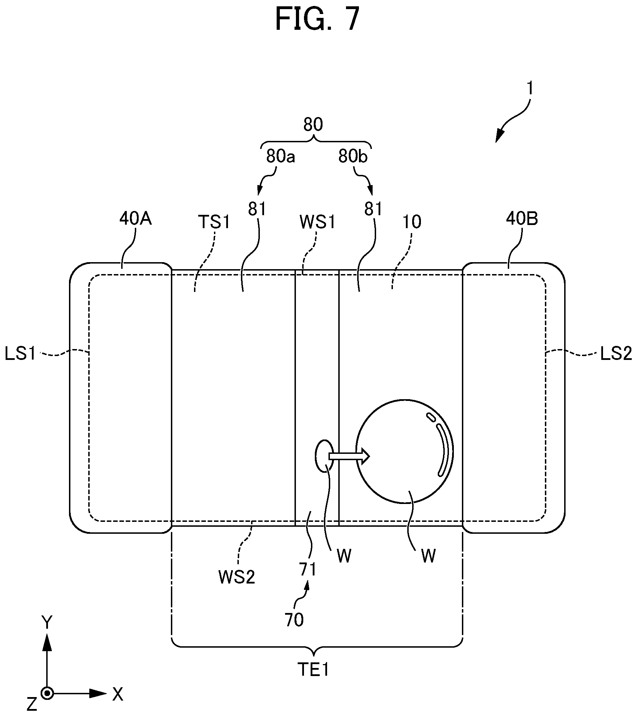

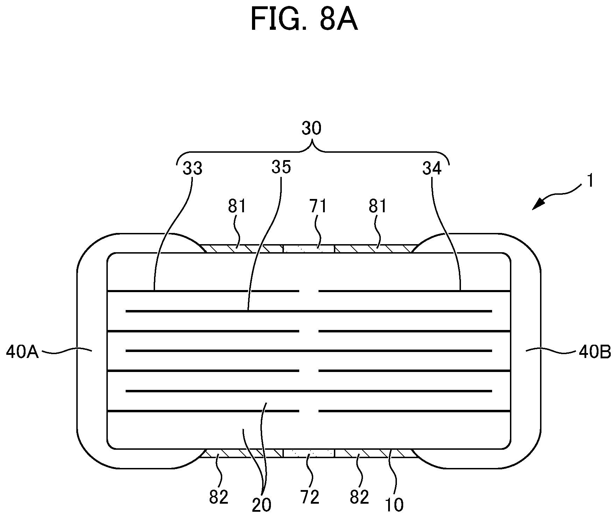

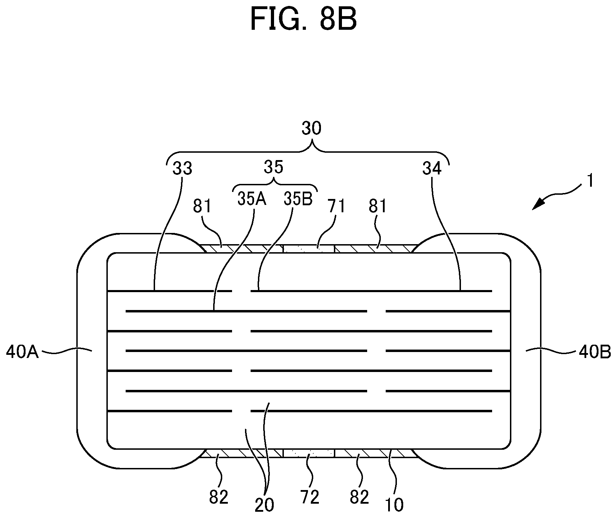

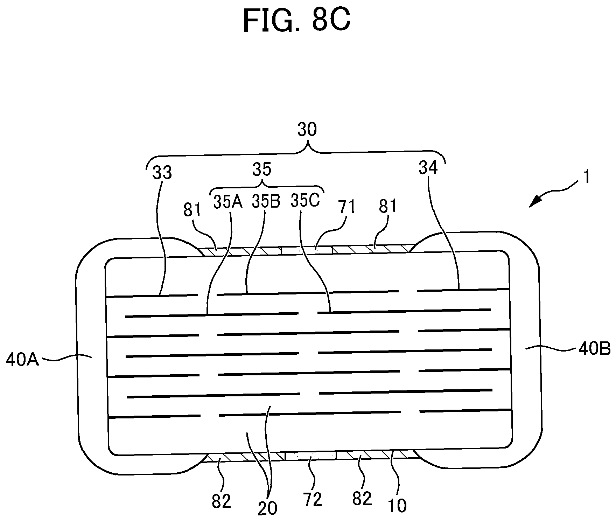

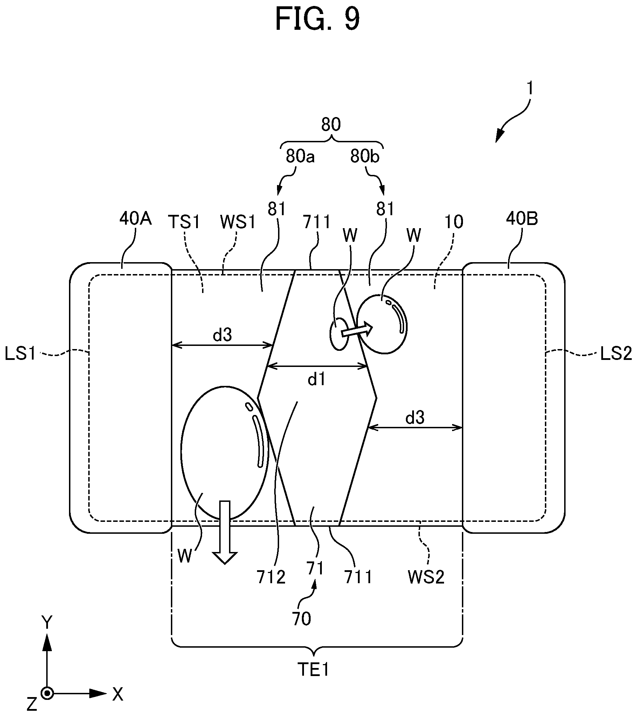

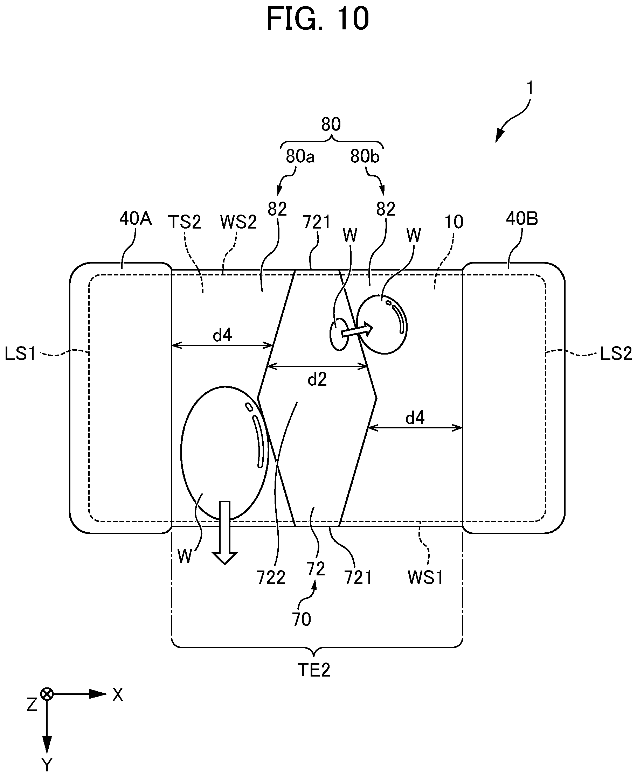

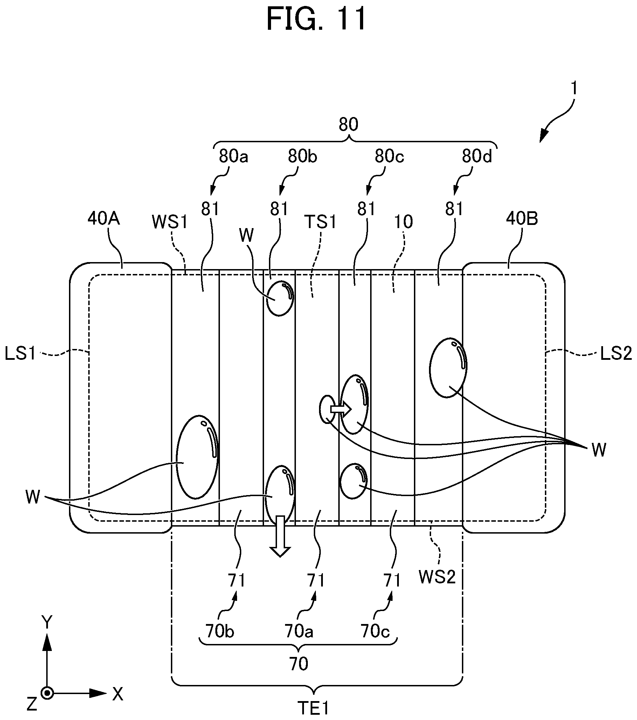

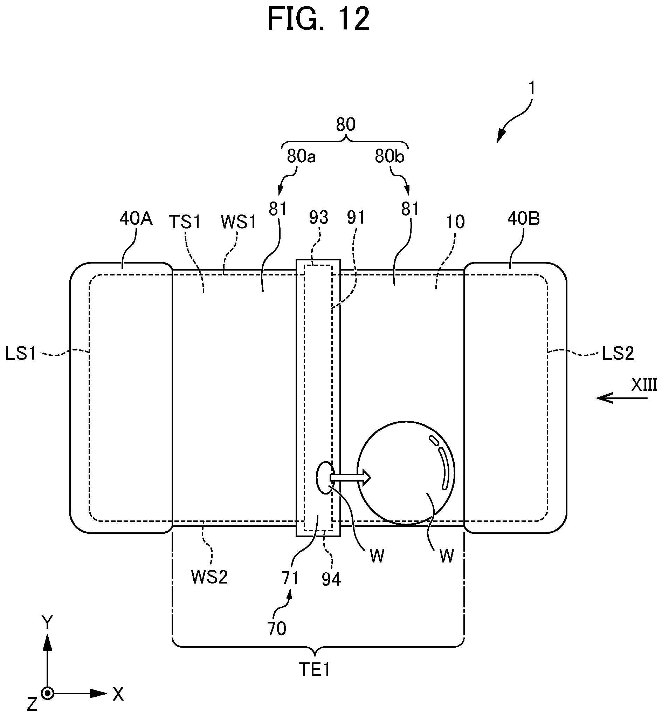

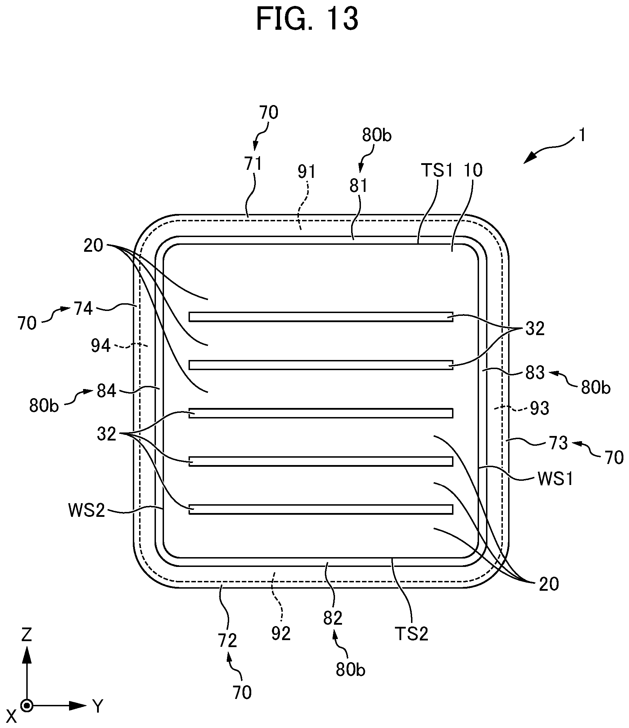

FIG. 1 is an external perspective view of a multilayer ceramic capacitor according to a first embodiment. FIG. 2 is a cross-sectional view taken along the line II-II of the multilayer ceramic capacitor shown in FIG. 1. FIG. 3 is a cross-sectional view taken along the line III-III of the multilayer ceramic capacitor shown in FIG. 2. FIG. 4A is a cross-sectional view taken along the line IVA-IVA of the multilayer ceramic capacitor shown in FIG. 2. FIG. 4B is a cross-sectional view taken along the line IVB-IVB of the multilayer ceramic capacitor shown in FIG. 2. FIG. 5 is a cross-sectional view taken along the line V-V of the multilayer ceramic capacitor shown in FIG. 2. FIG. 6 is a cross-sectional view taken along the line VI-VI of the multilayer ceramic capacitor shown in FIG. 2. FIG. 7 is an arrow view when the multilayer ceramic capacitor shown in FIG. 1 is viewed from the first main surface along the direction of the arrow VII. FIG. 8A is a diagram of a multilayer ceramic capacitor having a two-portion structure. FIG. 8B is a diagram of a multilayer ceramic capacitor having a three-portion structure. FIG. 8C is a diagram of a multilayer ceramic capacitor having a four-portion structure. FIG. 9 is a view showing a multilayer ceramic capacitor according to a second embodiment, and corresponds to FIG. 7. FIG. 10 is a view showing a multilayer ceramic capacitor according to a second embodiment, and is an arrow view when the multilayer ceramic capacitor is viewed from the second main surface along the direction of the arrow X shown in FIG. 1. FIG. 11 is a view showing a multilayer ceramic capacitor according to a third embodiment, and corresponds to FIG. 7. FIG. 12 is a diagram of a multilayer ceramic capacitor according to a fourth embodiment, and corresponds to FIG. 7. FIG. 13 is an imaginary arrow view when the multilayer ceramic capacitor shown in FIG. 12 is viewed from the second end surface along the direction of the arrow XIII.

### PREFERRED MODE FOR CARRYING OUT THE INVENTION

Hereinafter, a multilayer ceramic capacitor 1 according to a first embodiment of the present disclosure will be described. FIG. 1 is an external perspective view of a multilayer ceramic capacitor 1 of the present embodiment. FIG. 2 is a cross-sectional view taken along the line II-II of the multilayer ceramic capacitor 1 of FIG. 1. FIG. 3 is a cross-sectional view taken along the line III-III of the multilayer ceramic capacitor 1 of FIG. 2. FIG. 4A is a cross-sectional view taken along the line IVA-IVA of the multilayer ceramic capacitor 1 of FIG. 2. FIG. 4B is a cross-sectional view taken along the line IVB-IVB of the multilayer ceramic capacitor 1 of FIG. 2.

The multilayer ceramic capacitor 1 includes a multilayer body 10 and external electrodes 40.

FIGS. 1 to 4B each show an XYZ Cartesian coordinate system. The length direction L of the multilayer ceramic capacitor 1 and the multilayer body 10 corresponds to the X direction. The width direction W of the multilayer ceramic capacitor 1 and the multilayer body 10 corresponds to the Y direction. The height direction T of the multilayer ceramic capacitor 1 and the multilayer body 10 corresponds to the Z direction. Here, the cross section shown in FIG. 2 is also referred to as an LT cross section. The cross section shown in FIG. 3 is also referred to as a WT cross section. The cross sections shown in FIGS. 4A and 4B are also referred to as LW cross sections.

As shown in FIGS. 1 to 4B, the multilayer body 10 includes a first main surface TS1 and a second main surface TS2 opposed to each other in the height direction T, a first lateral surface WS1 and a second lateral surface WS2 opposed to each other in the width direction W orthogonal to the height direction T, and a first end surface LS1 and a second end surface LS2 opposed to each other in the length direction L orthogonal to the height direction T and the width direction W.

As shown in FIG. 1, the multilayer body 10 has a substantially rectangular parallelepiped shape. The dimension of the multilayer body 10 in the length direction L is not necessarily longer than the dimension in the width direction W. The corner portions and ridge portions of the multilayer body 10 are preferably rounded. Each of the corner portions is a portion where the three surfaces of the multilayer body intersect with each other, and each of the ridge portions is a portion where the two surfaces of the multilayer body intersect with each other. In addition, unevenness, irregularity, or the like may be provided on a portion or the entirety of the surface of the multilayer body 10. The surface of the multilayer body 10 includes a hydrophilic portion 80 and a hydrophobic portion 70. The hydrophilic portion 80 and the hydrophobic portion 70 will be described later. In addition, the surface of the multilayer body 10 includes the first main surface TS1, the second main surface TS2, the first lateral surface WS1, the second lateral surface WS2, the first end surface LS1, and the second end surface LS2.

As shown in FIGS. 2 and 3, the multilayer body 10 includes an inner layer portion 11, and a first main surface-side outer layer portion 12 and a second main surface-side outer layer portion 13 provided to sandwich the inner layer portion 11 in the height direction T.

The inner layer portion 11 includes a plurality of dielectric layers 20 and a plurality of internal electrode layers 30. The inner layer portion 11 includes the internal electrode layers 30 from the internal electrode layer 30 located closest to the first main surface TS1 to the internal electrode layer 30 located closest to the second main surface TS2 in the height direction T. In the inner layer portion 11, the plurality of internal electrode layers 30 are opposed to one another with the dielectric layer 20 interposed therebetween. The inner layer portion 11 is a portion that generates capacitance and substantially functions as a capacitor.

Each of the dielectric layers 20 are made of a dielectric material. The dielectric material may be, for example, a dielectric ceramic including ingredients such as BaTiO₃, CaTiO₃, SrTiO₃, or CaZrO₃. The dielectric material may be obtained by adding an auxiliary component such as a Mn compound, a Fe compound, a Cr compound, a Co compound, or a Ni compound to these main components. The dielectric material is particularly preferably a material containing BaTiO₃ as a main component.

The thickness of each of the dielectric layers 20 is preferably 0.5 µm or more and 10 µm or less. The number of laminated dielectric layers 20 is preferably 15 or more and 1200 or less. The number of the dielectric layers 20 is the total number of the number of the dielectric layers in the inner layer portion 11 and the number of the dielectric layers in the first main surface-side outer layer portion 12 and the second main surface-side outer layer portion 13.

The plurality of internal electrode layers 30 include a plurality of first internal electrode layers 31 and a plurality of second internal electrode layers 32. The plurality of first internal electrode layers 31 are respectively provided on the plurality of dielectric layers 20. The plurality of second internal electrode layers 32 are respectively provided on the plurality of dielectric layers 20. The plurality of first internal electrode layers 31 and the plurality of second internal electrode layers 32 are alternately provided in the height direction T of the multilayer body 10 with a corresponding one of the dielectric layers 20 interposed therebetween. Each of the plurality of first internal electrode layers 31 and each of the plurality of second internal electrode layers 32 sandwich a corresponding one of the dielectric layers 20.

Each of the first internal electrode layers 31 includes a first counter portion 31A opposed to a corresponding one or two of the second internal electrode layers 32, and a first extension portion 31B extending from the first counter portion 31A to the first end surface LS1. The first extension portion 31B is exposed at the first end surface LS1.

Each of the second internal electrode layers 32 includes a second counter portion 32A opposed to a corresponding one or two of the first internal electrode layers 31, and a second extension portion 32B extending from the second counter portion 32A to the second end surface LS2. The second extension portion 32B is exposed at the second end surface LS2.

In the present embodiment, capacitance is generated by the first counter portions 31A and the second counter portions 32A opposed to each other with a corresponding one of the dielectric layers 20 interposed therebetween, such that the characteristics of the capacitor are developed.

The shapes of the first counter portion 31A and the second counter portion 32A are not particularly limited, but are preferably rectangular. The corner portions of the rectangular shape may be rounded, or the corner portions of the rectangular shape may be obliquely formed. The shapes of the first extension portion 31B and the second extension portion 32B are not particularly limited, but are preferably rectangular. The corner portions of the rectangular shape may be rounded, or the corner portions of the rectangular shape may be obliquely formed.

The dimension of each of the first counter portions 31A in the width direction W and the dimension of each of the first extension portions 31B in the width direction W may be the same or may be smaller than the other. The dimension of each of the second counter portions 32A in the width direction W and the dimension of each of the second extension portions 32B in the width direction W may be the same, or may be narrower than the other.

The first internal electrode layers 31 and the second internal electrode layers 32 are each made of, for example, a metal such as Ni, Cu, Ag, Pd, or Au, or an appropriate electrically conductive material such as an alloy containing at least one of these metals. When an alloy is used, each of the first internal electrode layers 31 and the second internal electrode layers 32 may be formed of, for example, an Ag-Pd alloy.

The thickness of each of the first internal electrode layers 31 and the second internal electrode layers 32 is preferably, for example, about 0.2 µm or more and 2.0 µm or less. The total number of the first internal electrode layers 31 and the second internal electrode layers 32 is preferably 15 or more and 1000 or less.

The first main surface-side outer layer portion 12 is located adjacent to the first main surface TS1 of the multilayer body 10. The first main surface-side outer layer portion 12 is an aggregate of the plurality of dielectric layers 20 located between the first main surface TS1 and the inner electrode layer 30 closest to the first main surface TS1. The dielectric layers 20 in the first main surface-side outer layer portion 12 may be the same as the dielectric layer 20 in the inner layer portion 11.

The second main surface-side outer layer portion 13 is located adjacent to the second main surface TS2 of the multilayer body 10. The second main surface-side outer layer portion 13 is an aggregate of the plurality of dielectric layers 20 located between the second main surface TS2 and the inner electrode layer 30 closest to the second main surface TS2. The dielectric layer 20 in the second main surface-side outer layer portion 13 may be the same as the dielectric layer 20 in the inner layer portion 11.

As described above, the multilayer body 10 includes the plurality of laminated dielectric layers 20 and the plurality of laminated internal electrode layers 30 on the dielectric layers 20. That is, the multilayer ceramic capacitor 1 includes the multilayer body 10 in which the dielectric layers 20 and the internal electrode layers 30 are alternately laminated.

The multilayer body 10 includes a counter electrode portion 11E. The counter electrode portion 11E is a portion where the first counter portions 31A of the first internal electrode layers 31 and the second counter portions 32A of the second internal electrode layers 32 are opposed to each other. The counter electrode portion 11E is configured as a portion of the inner layer portion 11. FIGS. 4A and 4B each illustrate the lengths of the counter electrode portion 11E in the width direction W and the length direction L. The counter electrode portion 11E is also referred to as a capacitor effective portion.

The multilayer body 10 includes lateral surface-side outer layer portions. The lateral surface-side outer layer portions include a first lateral surface-side outer layer portion WG1 and a second lateral surface-side outer layer portion WG2. The first lateral surface-side outer layer portion WG1 is a portion including the dielectric layer 20 located between the counter electrode portion 11E and the first lateral surface WS1. The second lateral surface-side outer layer portion WG2 is a portion including the dielectric layer 20 located between the counter electrode portion 11E and the second lateral surface WS2. FIGS. 3, 4A, and 4B each illustrate the ranges of the first lateral surface-side outer layer portion WG1 and the second lateral surface-side outer layer portion WG2 in the width direction W. The lateral surface-side outer layer portion is also referred to as a W gap or a side gap.

The multilayer body 10 includes end surface-side outer layer portions. The end surface-side outer layer portions include a first end surface-side outer layer portion LG1 and a second end surface-side outer layer portion LG2. The first end surface-side outer layer portion LG1 is a portion including the dielectric layer 20 located between the counter electrode portion 11E and the first end surface LS1. The second end surface-side outer layer portion LG2 is a portion including the dielectric layer 20 located between the counter electrode portion 11E and the second end surface LS2. FIGS. 2, 4A, and 4B each illustrate the ranges in the length direction L of the first end surface-side outer layer portion LG1 and the second end surface-side outer layer portion LG2. The end surface-side outer layer portion is also referred to as an L gap or an end gap.

The external electrodes 40 include a first external electrode 40A provided adjacent to the first end surface LS1 and a second external electrode 40B provided adjacent to the second end surface LS2.

The first external electrode 40A is provided on the first end surface LS1. The first external electrode 40A is connected to the first internal electrode layers 31. The first external electrode 40A may also be provided on a portion of the first main surface TS1 and a portion of the second main surface TS2, and a portion of the first lateral surface WS1 and a portion of the second lateral surface WS2. In the present embodiment, the first external electrode 40A extends from the first end surface LS1 to a portion of the first main surface TS1 and a portion of the second main surface TS2, and a portion of the first lateral surface WS1 and a portion of the second lateral surface WS2.

The second external electrode 40B is provided on the second end surface LS2. The second external electrode 40B is connected to the second internal electrode layers 32. The second external electrode 40B may also be provided on a portion of the first main surface TS1 and a portion of the second main surface TS2, and a portion of the first lateral surface WS1 and a portion of the second lateral surface WS2. In the present embodiment, the second external electrode 40B extends from the second end surface LS2 to a portion of the first main surface TS1 and a portion of the second main surface TS2, and a portion of the first lateral surface WS1 and a portion of the second lateral surface WS2.

As described above, in the multilayer body 10, the capacitance is generated by the first counter portions 31A of the first internal electrode layers 31 and the second counter portions 32A of the second internal electrode layers 32 opposed to each other with the dielectric layers 20 interposed therebetween. Therefore, the characteristics of the capacitor is developed between the first external electrode 40A to which the first internal electrode layers 31 are connected and the second external electrode 40B to which the second internal electrode layers 32 are connected.

The first external electrode 40A includes a first base electrode layer 50A and a first plated layer 60A provided on the first base electrode layer 50A.

The second external electrode 40B includes a second base electrode layer 50B and a second plated layer 60B provided on the second base electrode layer 50B.

The first base electrode layer 50A is provided on the first end surface LS1. The first base electrode layer 50A is connected to the first internal electrode layers 31. In the present embodiment, the first base electrode layer 50A extends from the first end surface LS1 to a portion of the first main surface TS1 and a portion of the second main surface TS2, and a portion of the first lateral surface WS1 and a portion of the second lateral surface WS2.

The second base electrode layer 50B is provided on the second end surface LS2. The second base electrode layer 50B is connected to the second internal electrode layers 32. In the present embodiment, the second base electrode layer 50B extends from the second end surface LS2 to a portion of the first main surface TS1 and a portion of the second main surface TS2, and a portion of the first lateral surface WS1 and a portion of the second lateral surface WS2.

The first base electrode layer 50A and the second base electrode layer 50B of the present embodiment are fired layers. Each of the fired layers preferably contains either a metal component or a glass component or both of them. The metal component includes, for example, at least one selected from Cu, Ni, Ag, Pd, an Ag-Pd alloy, Au, and the like. The glass component includes, for example, at least one selected from B, Si, Ba, Mg, Al, Li, and the like. As the ceramic component, the same type of ceramic material as the dielectric layers 20 may be used, or a different type of ceramic material may be used. The ceramic component includes, for example, at least one selected from BaTiO₃, CaTiO₃, (Ba,Ca)TiO₃, SrTiO₃, CaZrO₃, and the like.

The fired layer is formed by, for example, applying an electrically conductive paste containing glass and metal to a multilayer body, and firing the resulting product. The fired layer may be formed by simultaneously firing a multilayer chip having internal electrodes and dielectric layers and an electrically conductive paste applied to the multilayer chip, or may be formed by firing the multilayer chip having internal electrodes and dielectric layers to obtain a multilayer body, and then applying the electrically conductive paste to the multilayer body, and firing the multilayer body. When the multilayer chip having the internal electrodes and the dielectric layers and the electrically conductive paste applied to the multilayer chip are fired at the same time, the fired layer is preferably formed by firing a material to which a ceramic material is added instead of a glass component. In this case, it is particularly preferable to use the same type of ceramic material as the dielectric layers 20 as the ceramic material to be added. The fired layer may include a plurality of layers.

The thickness in the length direction of the first base electrode layer 50A located at the first end surface LS1 is preferably, for example, about 10 µm or more and 150 µm or less in the central portion in the height direction T and the width direction W of the first base electrode layer 50A.

The thickness in the length direction of the second base electrode layer 50B located at the second end surface LS2 is preferably, for example, about 10 µm or more and 150 µm or less in the middle portion in the height direction T and the width direction W of the second base electrode layer 50B.

In a case where the first base electrode layer 50A is also provided on a portion of at least one of the first main surface TS1 and the second main surface TS2, the thickness in the height direction T of the first base electrode layer 50A provided at this portion is preferably, for example, about 10 µm or more and 100 µm or less in the middle portion in the length direction L and the width direction W of the first base electrode layer 50A provided at this portion.

In a case where the first base electrode layer 50A is also provided on a portion of at least one of the first lateral surface WS1 and the second lateral surface WS2, the thickness in the width direction of the first base electrode layer 50A provided at this portion is preferably, for example, about 10 µm or more and 100 µm or less in the middle portion in the length direction L and the height direction T of the first base electrode layer 50A provided at this portion.

In a case where the second base electrode layer 50B is also provided on a portion of at least one of the first main surface TS1 and the second main surface TS2, the thickness in the height direction T of the second base electrode layer 50B provided at this portion is preferably, for example, about 10 µm or more and 100 µm or less in the middle portion in the length direction L and the width direction W of the second base electrode layer 50B provided at this portion.

In a case where the second base electrode layer 50B is also provided on a portion of at least one of the first lateral surface WS1 and the second lateral surface WS2, the thickness in the width direction of the second base electrode layer 50B provided at this portion is preferably, for example, about 10 µm or more and 100 µm or less in the middle portion in the length direction L and the height direction T of the second base electrode layer 50B provided at this portion.

In addition, the first base electrode layer 50A and the second base electrode layer 50B are not limited to the fired layers. The first base electrode layer 50A and the second base electrode layer 50B include at least one selected from a fired layer, an electrically conductive resin layer, a thin film layer, and the like. For example, the first base electrode layer 50A and the second base electrode layer 50B may be thin film layers. The thin film layer is formed by a thin film forming method such as sputtering or vapor deposition. The thin film layer is a layer of 10 µm or less on which metal particles are deposited.

The first plated layer 60A covers the first base electrode layer 50A.

The second plated layer 60B covers the second base electrode layer 50B.

The first plated layer 60A and the second plated layer 60B may include, for example, at least one selected from Cu, Ni, Sn, Ag, Pd, an Ag-Pd alloy, Au, and the like. Each of the first plated layer 60A and the second plated layer 60B may include a plurality of layers. The first plated layer 60A and the second plated layer 60B preferably have a two-layer structure in which a Sn plated layer is provided on a Ni plated layer.

The first plated layer 60A covers the first base electrode layer 50A. In the present embodiment, the first plated layer 60A includes a first Ni plated layer 61A and a first Sn plated layer 62A located on the first Ni plated layer 61A.

The second plated layer 60B covers the second base electrode layer 50B. In the present embodiment, the second plated layer 60B includes a second Ni plated layer 61B and a second Sn plated layer 62B located on the second Ni plated layer 61B.

The Ni plated layer prevents the first base electrode layer 50A and the second base electrode layer 50B from being eroded by solder when the multilayer ceramic capacitor 1 is mounted. In addition, the Sn plated layer improves solder wettability when mounting the multilayer ceramic capacitor 1. This facilitates mounting of the multilayer ceramic capacitor 1. The thickness of each of the first Ni plated layer 61A, the first Sn plated layer 62A, the second Ni plated layer 61B, and the second Sn plated layer 62B is preferably 1 µm or more and 15 µm or less.

The first external electrode 40A and the second external electrode 40B of the present embodiment may include, for example, an electrically conductive resin layer containing an electrically conductive filler and a thermosetting resin. When the electrically conductive resin layer is provided as the base electrode layer (the first base electrode layer 50A and the second base electrode layer 50B), the electrically conductive resin layer may cover the fired layer, or may be provided directly on the multilayer body 10 without providing the fired layer. When the electrically conductive resin layer covers the fired layer, the electrically conductive resin layer is provided between the fired layer and the plated layers (the first plated layer 60A and the second plated layer 60B). The electrically conductive resin layer may completely cover the fired layer or may cover a portion of the fired layer.

The electrically conductive resin layer containing a thermosetting resin is more flexible than an electrically conductive layer made of, for example, a plated film or a fired product of an electrically conductive paste. Therefore, the electrically conductive resin layer functions as a buffer layer even when a physical impact or an impact due to a thermal cycle is applied to the multilayer ceramic capacitor 1. Therefore, the electrically conductive resin layer suppresses the occurrence of cracks in the multilayer ceramic capacitor 1.

The metal constituting the electrically conductive filler may be Ag, Cu, Ni, Sn, Bi, or an alloy containing them. The electrically conductive filler preferably contains Ag. The electrically conductive filler is, for example, metal powder of Ag. Since Ag has the lowest specific resistance among metals, Ag is suitable as an electrode material. Since Ag is a noble metal, Ag is less likely to be oxidized and has high weather resistance. Therefore, the metal powder of Ag is suitable as an electrically conductive filler.

In addition, the electrically conductive filler may be a metal powder having Ag coated on the surface of the metal powder. When an Ag-coated metal powder is used, the metal powder is preferably Cu, Ni, Sn, Bi, or an alloy powder thereof. In order to make the metal of the base material inexpensive while maintaining the characteristics of Ag, it is preferable to use Ag-coated metal powder.

Further, the electrically conductive filler may be Cu or Ni subjected to an antioxidant treatment. The electrically conductive filler may be a metal powder obtained by coating the surface of the metal powder with Sn, Ni, or Cu. When a metal powder coated with Sn, Ni, or Cu is used, the metal powder is preferably Ag, Cu, Ni, Sn, Bi, or an alloy powder thereof.

The shape of the electrically conductive filler is not particularly limited. As the electrically conductive filler, those having a spherical shape, a flat shape, or the like can be used, and it is preferable to use a mixture of a spherical metal powder and a flat metal powder.

The average particle diameter of the electrically conductive filler is not particularly limited. The average particle diameter of the electrically conductive filler may be, for example, 0.3 µm or more and 10 µm or less.

The electrically conductive filler contained in the electrically conductive resin layer is preferably contained in an amount of 35 vol% or more and 75 vol% or less with respect to the total volume of the electrically conductive resin layer.

The electrically conductive filler contained in the electrically conductive resin layer mainly maintains electrical conductivity of the electrically conductive resin layer. Specifically, when the plurality of electrically conductive fillers are in contact with each other, an electrical conduction path is formed inside the electrically conductive resin layer.

The resin constituting the electrically conductive resin layer may contain at least one selected from various known thermosetting resins such as an epoxy resin, a phenol resin, a urethane resin, a silicone resin, and a polyimide resin. Among them, an epoxy resin excellent in heat resistance, moisture resistance, adhesion, and the like is one of the most suitable resins. The resin of the electrically conductive resin layer preferably contains a curing agent together with a thermosetting resin. When an epoxy resin is used as the base resin, the curing agent of the epoxy resin may be various known compounds such as phenol type, amine type, acid anhydride type, imidazole type, active ester type, and amide imide type.

The electrically conductive resin layer may include a plurality of layers. The thickness of the thickest portion of the electrically conductive resin layer is preferably 10 µm or more and 200 µm or less.

In addition, the first base electrode layer 50A and the second base electrode layer 50B may not be provided, and the first plated layer 60A and the second plated layer 60B described later may be directly provided on the multilayer body 10. That is, the multilayer ceramic capacitor 1 may include a plated layer that is directly electrically connected to the first internal electrode layer 31 and the second internal electrode layer 32. In such a case, a plated layer may be formed after the catalyst is provided on the surface of the multilayer body 10 as a pretreatment.

Also in this case, the plated layer preferably includes a plurality of layers. Each of the lower plated layer and the upper plated layer preferably contains, for example, at least one metal selected from Cu, Ni, Sn, Pb, Au, Ag, Pd, Bi, and Zn, or an alloy containing these metals. The lower plated layer is more preferably formed using Ni having solder barrier performance. The upper plated layer is more preferably formed using Sn or Au having good solder wettability. In addition, for example, when the first internal electrode layer 31 and the second internal electrode layer 32 are formed using Ni, the lower plated layer is preferably formed using Cu having good bonding property with Ni. The upper plated layer may be formed as necessary, and each of the external electrodes 40 may be formed of only the lower plated layer. The upper plated layer may be the outermost layer, or another plated layer may be further formed on the surface of the upper plated layer.

The thickness per layer of the plated layer provided without the base electrode layer is preferably 1 µm or more and 15 µm or less. The plated layer preferably does not contain glass. The metal ratio per unit volume of the plated layer is preferably 99% by volume or more.

In addition, when the plated layer is directly formed on the multilayer body 10, the thickness of the base electrode layer can be reduced. Therefore, it is possible to reduce the height of the multilayer ceramic capacitor 1 by reducing the dimension of the multilayer ceramic capacitor 1 in the height direction T by an amount corresponding to the thickness of the base electrode layer being reduced. Alternatively, it is possible to improve the thickness of the element body by increasing the thickness of the dielectric layer 20 sandwiched between the first internal electrode layer 31 and the second internal electrode layer 32 by an amount corresponding to the thickness of the base electrode layer being reduced. As described above, by directly forming the plated layer on the multilayer body 10, it is possible to improve the degrees of freedom in designing the multilayer ceramic capacitor.

When the dimension in the length direction of the multilayer ceramic capacitor 1 including the multilayer body 10 and the external electrode 40 is defined as L, the L dimension is preferably 0.2 mm or more and 10 mm or less. When the dimension in the height direction of the multilayer ceramic capacitor 1 is defined as T, the T dimension is preferably 0.1 mm or more and 5 mm or less. Further, when the dimension in the width direction of the multilayer ceramic capacitor 1 is defined as W, the W dimension is preferably 0.1 mm or more and 10 mm or less.

Here, for example, when a voltage is applied between the external electrodes 40 in a state where water droplets generated by dew condensation spread between the external electrodes 40 on the surface of the multilayer body 10 without interruption, ionized metal species are dissolved and precipitated from the external electrodes 40, such that electrochemical migration occurs. In the present embodiment, in order to suppress the occurrence of the electrochemical migration, the hydrophobic portion 70 and the hydrophilic portion 80 are provided on the surface of the multilayer body 10.

Next, configurations of the hydrophobic portion 70 and the hydrophilic portion 80 will be described with reference to FIGS. 1, 2, and 4A to 7. FIG. 5 is a cross-sectional view taken along the line V-V of the multilayer ceramic capacitor 1 shown in FIG. 2. FIG. 6 is a cross-sectional view taken along the line VI-VI of the multilayer ceramic capacitor 1 shown in FIG. 2. FIG. 7 is an arrow view when the multilayer ceramic capacitor 1 shown in FIG. 1 is viewed from the first main surface TS1 along the direction of arrow VII. In FIG. 7, the outline of the multilayer body 10 covered with the hydrophobic portion 70, the hydrophilic portion 80, and the external electrodes 40 is indicated by a broken line.

The hydrophobic portion 70 is a hydrophobic layer provided on the surface of the multilayer body 10. The hydrophobic portion 70 is formed by coating the multilayer body 10 with, for example, a fluorine-based silane coupling material. In the present embodiment, one hydrophobic portion 70 is provided on the surface of the multilayer body 10.

As shown in FIGS. 1, 2, 4A, 4B, 5, and 7, the hydrophobic portion 70 includes a first main surface-side hydrophobic portion 71, a second main surface-side hydrophobic portion 72, a first lateral surface-side hydrophobic portion 73, and a second lateral surface-side hydrophobic portion 74.

The first main surface-side hydrophobic portion 71 is a hydrophobic layer containing at least one of fluorine or silicone. The first main surface-side hydrophobic portion 71 is provided on at least a portion of the first main surface TS1. Specifically, as shown in FIG. 2, the first main surface-side hydrophobic portion 71 is provided in a region TE1 located between the first external electrode 40A and the second external electrode 40B on the first main surface TS1. In the present embodiment, the first main surface-side hydrophobic portion 71 is provided so as to extend in a strip shape in the width direction W in the middle portion in the length direction L of the multilayer body 10. As shown in FIGS. 1, 5, and 7, the first main surface-side hydrophobic portion 71 is provided on the first main surface TS1 from an end portion adjacent to the first lateral surface WS1 to an end portion adjacent to the second lateral surface WS2 in the width direction W.

The second main surface-side hydrophobic portion 72 is a hydrophobic layer containing at least one of fluorine or silicone. The second main surface-side hydrophobic portion 72 is provided on at least a portion of the second main surface TS2. Specifically, as shown in FIG. 2, the second main surface-side hydrophobic portion 72 is provided in a region TE2 located between the first external electrode 40A and the second external electrode 40B on the second main surface TS2. In the present embodiment, the second main surface-side hydrophobic portion 72 is provided so as to extend in a strip shape in the width direction W in the middle portion in the length direction L of the multilayer body 10. As shown in FIG. 5, the second main surface-side hydrophobic portion 72 is provided on the second main surface TS2 from an end portion adjacent to the first lateral surface WS1 to an end portion adjacent to the second lateral surface WS2 side in the width direction W.

The first lateral surface-side hydrophobic portion 73 is a hydrophobic layer containing at least one of fluorine or silicone. The first lateral surface-side hydrophobic portion 73 is provided on at least a portion of the first lateral surface WS1. Specifically, as shown in FIGS. 4A and 4B, the first lateral surface-side hydrophobic portion 73 is provided in a region WE1 located between the first external electrode 40A and the second external electrode 40B on the first lateral surface WS1. That is, the first lateral surface-side hydrophobic portion 73 is provided between the first external electrode 40A and the second external electrode 40B on the first lateral surface WS1. In the present embodiment, the first lateral surface-side hydrophobic portion 73 is provided so as to extend in a strip shape in the height direction T in the middle portion in the length direction L of the multilayer body 10. The first lateral surface-side hydrophobic portion 73 is provided from an end portion adjacent to the first main surface TS1 to an end portion adjacent to the second main surface TS2 in the height direction T on the first lateral surface WS1.

The second lateral surface-side hydrophobic portion 74 is a hydrophobic layer containing at least one of fluorine or silicone. The second lateral surface-side hydrophobic portion 74 is provided on at least a portion of the second lateral surface WS2. Specifically, as shown in FIGS. 4A and 4B, the second lateral surface-side hydrophobic portion 74 is provided in a region WE2 located between the first external electrode 40A and the second external electrode 40B on the second lateral surface WS2. In the present embodiment, the second lateral surface-side hydrophobic portion 74 is provided so as to extend in a strip shape in the height direction T in the middle portion in the length direction L of the multilayer body 10. The second lateral surface-side hydrophobic portion 74 is provided on the second lateral surface WS2 from the end portion adjacent to the first main surface TS1 to the end portion adjacent to the second main surface TS2 in the height direction T.

In the hydrophobic portion 70 of the present embodiment, as shown in FIG. 5, the first main surface-side hydrophobic portion 71 and the second main surface-side hydrophobic portion 72 are continuously provided via the first lateral surface-side hydrophobic portion 73, and are continuously provided via the second lateral surface-side hydrophobic portion 74. The first lateral surface-side hydrophobic portion 73 and the second lateral surface-side hydrophobic portion 74 are continuously provided via the first main surface-side hydrophobic portion 71, and are continuously provided via the second main surface-side hydrophobic portion 72. That is, the hydrophobic portion 70 has a ring shape as a whole, and is provided over the first main surface TS1, the second main surface TS2, the first lateral surface WS1, and the second lateral surface WS2 of the multilayer body 10. According to this configuration, since the hydrophobic portion 70 is provided on the surface of the multilayer body 10, it is possible to suppress the water droplets from spreading on the surface of the multilayer body 10 when the water droplets W are generated from dew condensation. Therefore, it is possible to suppress the formation of a water droplet path which is a water film bridging between the first external electrode 40A and the second external electrode 40B.

The hydrophilic portion 80 is a hydrophilic layer provided on the surface of the multilayer body 10. The hydrophilic portion 80 is formed by applying, for example, a hydroxyl group-containing silane coupling material to the multilayer body 10. In the present embodiment, hydrophilic portions 80a and 80b, which are the two hydrophilic portions 80, are provided on the surface of the multilayer body 10. Specifically, the hydrophilic portion 80a is provided between the hydrophobic portion 70 and the first external electrode 40A on the first main surface TS1, on the second main surface TS2, on the first lateral surface WS1, and on the second lateral surface WS2. The hydrophilic portion 80b is provided between the hydrophobic portion 70 and the second external electrode 40B on the first main surface TS1, on the second main surface TS2, on the first lateral surface WS1, and on the second lateral surface WS2. That is, the hydrophobic portion 70 is sandwiched between the hydrophilic portions 80 in the length direction L.

As shown in FIGS. 1, 2, 4A, 4B, 6, and 7, each hydrophilic portion 80 includes a first main surface-side hydrophilic portion 81, a second main surface-side hydrophilic portion 82, a first lateral surface-side hydrophilic portion 83, and a second lateral surface-side hydrophilic portion 84.

The first main surface-side hydrophilic portion 81 is a hydrophilic layer having a hydroxyl group. The first main surface-side hydrophilic portion 81 is provided on at least a portion of the first main surface TS1. Specifically, as shown in FIG. 2, the first main surface-side hydrophilic portion 81 is provided in a region TE1 located between the first external electrode 40A and the second external electrode 40B on the first main surface TS1. In the present embodiment, the first main surface-side hydrophilic portion 81 of the hydrophilic portion 80a is provided between the first external electrode 40A and the hydrophobic portion 70 on the first main surface TS1. Specifically, the first main surface-side hydrophilic portion 81 of the hydrophilic portion 80a covers the entire surface of the first main surface TS1 between the first external electrode 40A and the hydrophobic portion 70. That is, the first main surface-side hydrophilic portion 81 of the hydrophilic portion 80a is in contact with the first main surface-side hydrophobic portion 71 of the hydrophobic portion 70. Further, the first main surface-side hydrophilic portion 81 of the hydrophilic portion 80b is provided between the hydrophobic portion 70 and the second external electrode 40B on the first main surface TS1. Specifically, the first main surface-side hydrophilic portion 81 of the hydrophilic portion 80b covers the entire surface of the first main surface TS1 between the hydrophobic portion 70 and the second external electrode 40B. That is, the first main surface-side hydrophilic portion 81 of the hydrophilic portion 80b is in contact with the first main surface-side hydrophobic portion 71 of the hydrophobic portion 70. As shown in FIG. 6 and FIG. 7, the first main surface-side hydrophilic portion 81 is provided from an end portion adjacent to the first lateral surface WS1 to an end portion adjacent to the second lateral surface WS2 in the width direction W on the first main surface TS1.

The second main surface-side hydrophilic portion 82 is a hydrophilic layer having a hydroxyl group. The second main surface-side hydrophilic portion 82 is provided on at least a portion of the second main surface TS2. Specifically, as shown in FIG. 2, the second main surface-side hydrophilic portion 82 is provided in a region TE2 located between the first external electrode 40A and the second external electrode 40B on the second main surface TS2. In the present embodiment, the second main surface-side hydrophilic portion 82 of the hydrophilic portion 80a is provided between the first external electrode 40A and the hydrophobic portion 70 on the second main surface TS2. Specifically, the second main surface-side hydrophilic portion 82 of the hydrophilic portion 80a covers the entire surface of the second main surface TS2 between the first external electrode 40A and the hydrophobic portion 70. That is, the second main surface-side hydrophilic portion 82 of the hydrophilic portion 80a is in contact with the second main surface-side hydrophobic portion 72 of the hydrophobic portion 70. The second main surface-side hydrophilic portion 82 of the hydrophilic portion 80b is provided between the hydrophobic portion 70 and the second external electrode 40B on the second main surface TS2. Specifically, the second main surface-side hydrophilic portion 82 of the hydrophilic portion 80b covers the entire surface of the second main surface TS2 between the hydrophobic portion 70 and the second external electrode 40B. That is, the second main surface-side hydrophilic portion 82 of the hydrophilic portion 80b is in contact with the second main surface-side hydrophobic portion 72 of the hydrophobic portion 70. As shown in FIG. 6, the second main surface-side hydrophilic portion 82 is provided from an end portion adjacent to the first lateral surface WS1 to an end portion adjacent to the second lateral surface WS2 in the width direction W on the second main surface TS2.

The first lateral surface-side hydrophilic portion 83 is a hydrophilic layer having a hydroxyl group. The first lateral surface-side hydrophilic portion 83 is provided on at least a portion of the first lateral surface WS1. Specifically, as shown in FIGS. 4A and 4B, the first lateral surface-side hydrophilic portion 83 is provided in a region WE1 located between the first external electrode 40A and the second external electrode 40B on the first lateral surface WS1. In the present embodiment, the first lateral surface-side hydrophilic portion 83 of the hydrophilic portion 80a is provided between the first external electrode 40A and the hydrophobic portion 70 on the first lateral surface WS1. Specifically, the first lateral surface-side hydrophilic portion 83 of the hydrophilic portion 80a covers the entire surface of the first lateral surface WS1 between the first external electrode 40A and the hydrophobic portion 70. That is, the first lateral surface-side hydrophilic portion 83 of the hydrophilic portion 80a is in contact with the first lateral surface-side hydrophobic portion 73 of the hydrophobic portion 70. The first lateral surface-side hydrophilic portion 83 of the hydrophilic portion 80b is provided between the hydrophobic portion 70 and the second external electrode 40B on the first lateral surface WS1. Specifically, the first lateral surface-side hydrophilic portion 83 of the hydrophilic portion 80b covers the entire surface of the first lateral surface WS1 between the hydrophobic portion 70 and the second external electrode 40B. That is, the first lateral surface-side hydrophilic portion 83 of the hydrophilic portion 80b is in contact with the first lateral surface-side hydrophobic portion 73 of the hydrophobic portion 70. As shown in FIG. 6, the first lateral surface-side hydrophilic portion 83 is provided on the first lateral surface WS1 from an end portion adjacent to the first main surface TS1 to an end portion adjacent to the second main surface TS2 in the height direction T.

The second lateral surface-side hydrophilic portion 84 is a hydrophilic layer having a hydroxyl group. The second lateral surface-side hydrophilic portion 84 is provided on at least a portion of the second lateral surface WS2. Specifically, as shown in FIGS. 4A and 4B, the second lateral surface-side hydrophilic portion 84 is provided in a region WE2 located between the first external electrode 40A and the second external electrode 40B on the second lateral surface WS2. In the present embodiment, the second lateral surface-side hydrophilic portion 84 of the hydrophilic portion 80a is provided between the first external electrode 40A and the hydrophobic portion 70 on the second lateral surface WS2. Specifically, the second lateral surface-side hydrophilic portion 84 of the hydrophilic portion 80a covers the entire surface of the second lateral surface WS2 between the first external electrode 40A and the hydrophobic portion 70. That is, the second lateral surface-side hydrophilic portion 84 of the hydrophilic portion 80a is in contact with the second lateral surface-side hydrophobic portion 74 of the hydrophobic portion 70. The second lateral surface-side hydrophilic portion 84 of the hydrophilic portion 80b is provided between the hydrophobic portion 70 and the second external electrode 40B on the second lateral surface WS2. Specifically, the second lateral surface-side hydrophilic portion 84 of the hydrophilic portion 80b covers the entire surface of the second lateral surface WS2 between the hydrophobic portion 70 and the second external electrode 40B. That is, the second lateral surface-side hydrophilic portion 84 of the hydrophilic portion 80b is in contact with the second lateral surface-side hydrophobic portion 74 of the hydrophobic portion 70. As shown in FIG. 6, the second lateral surface-side hydrophilic portion 84 is provided on the second lateral surface WS2 from an end portion adjacent to the first main surface TS1 to an end portion adjacent to the second main surface TS2 in the height direction T.

In the hydrophilic portion 80 of the present embodiment, as shown in FIG. 6, the first main surface-side hydrophilic portion 81 and the second main surface-side hydrophilic portion 82 are provided continuously via the first lateral surface-side hydrophilic portion 83, and are provided continuously via the second lateral surface-side hydrophilic portion 84. The first lateral surface-side hydrophilic portion 83 and the second lateral surface-side hydrophilic portion 84 are continuously provided via the first main surface-side hydrophilic portion 81 and the second main surface-side hydrophilic portion 82. That is, the hydrophilic portion 80 has a ring shape as a whole, and is provided over the first main surface TS1, the second main surface TS2, the first lateral surface WS1, and the second lateral surface WS2 of the multilayer body 10.

Here, when the hydrophobic treatment is only performed by adding the water repellent agent or the like to the surface of the multilayer body 10 and the hydrophilic treatment is not performed on the portion to which the water repellent agent is not added, the difference in the contact angles of water between the portion to which the water repellent agent is added and the portion to which the water repellent agent is not added is small, and thus the water repellent effect may not be sufficiently obtained.

On the contrary, according to the multilayer ceramic capacitor 1 of the present embodiment, since not only the hydrophobic portion 70 but also the hydrophilic portion 80 are provided on the surface of the multilayer body 10 which is the ceramic element body, the water droplets W can be guided from the hydrophobic portion 70 to the hydrophilic portion 80 as shown in FIG. 7. With such a configuration, it is possible to suppress the formation of a water droplet path that bridges between the first external electrode 40A and the second external electrode 40B. Therefore, since an inter-electrode path due to the water droplet W is less likely to be formed, it is possible to significantly suppress deterioration due to electrochemical migration.

The thickness of the hydrophobic portion 70 is preferably 5 nm or more and 1000 nm or less. Accordingly, it is possible to more effectively suppress the formation of a water droplet path that guides the water droplet W generated by dew condensation to the hydrophilic portion 80 and bridges between the first external electrode 40A and the second external electrode 40B. When the thickness of the hydrophobic portion 70 is less than 5 nm, the contact angle with respect to water decreases, and the water repellent effect decreases. When the thickness of the hydrophobic portion 70 is larger than 1000 nm, the hydrophobic material of the hydrophobic portion 70 adheres to the adsorption nozzle when the multilayer ceramic capacitor 1 is inserted into the taping during the transport of the multilayer ceramic capacitor 1, such that an adsorption error easily occurs. The thickness of the hydrophobic portion 70 is calculated by measuring the weight, specific gravity, and surface area of the multilayer ceramic capacitor 1.

The thickness of the hydrophilic portion 80 is preferably 10 nm or more and 500 nm or less.

Next, the contact angle between the hydrophobic portion 70 and the hydrophilic portion 80 with respect to water will be described. The difference between the contact angle of water in the hydrophobic portion 70 and the contact angle of water in the hydrophilic portion 80 is preferably 30° or more. More preferably, the difference between the contact angle of water in the hydrophobic portion 70 and the contact angle of water in the hydrophilic portion 80 is 40° or more.

Next, a method of manufacturing the multilayer ceramic capacitor 1 of the present embodiment will be described.

A dielectric sheet for manufacturing the dielectric layers 20 and an electrically conductive paste for manufacturing the internal electrode layers 30 are prepared. The electrically conductive paste for manufacturing the dielectric sheet and the internal electrodes contains a binder and a solvent. The binder and the solvent may be known.

The electrically conductive paste for manufacturing the internal electrode layers 30 is printed on the dielectric sheet in a predetermined pattern by, for example, screen printing or gravure printing. Thus, the dielectric sheet on which the pattern of the first internal electrode layers 31 is formed and the dielectric sheet on which the pattern of the second internal electrode layers 32 is formed are prepared.

By laminating a predetermined number of dielectric sheets on which the pattern of the internal electrode layers is not printed, a portion functioning as the first main surface-side outer layer portion 12 on the first main surface TS1 side is formed. A dielectric sheet on which the pattern of the first internal electrode layers 31 is printed and a dielectric sheet on which the pattern of the second internal electrode layers 32 is printed are sequentially laminated thereon, such that a portion functioning as the inner layer portion 11 is formed. A predetermined number of dielectric sheets on which the pattern of the internal electrode layers is not printed are laminated on the portion functioning as the inner layer portion 11, such that a portion functioning as the second main surface-side outer layer portion 13 on the second main surface TS2 side is formed. In this way, a multilayer sheet is produced.

A multilayer block is produced by pressing the multilayer sheet in the height direction by a means such as isostatic pressing.

The multilayer block is cut into multilayer chips, each having a predetermined size. At this time, the corner portions and ridge portions of the multilayer chip may be rounded by barrel polishing or the like.

The multilayer chip is fired to produce the multilayer body 10. The firing temperature depends on the materials of the dielectric layers 20 and the internal electrode layers 30, but is preferably 900°C or more and 1400°C or less.

An electrically conductive paste functioning as a base electrode layer (the first base electrode layer 50A and the second base electrode layer 50B) is applied to both end surfaces of the multilayer body 10. In the present embodiment, the base electrode layer is a fired layer. An electrically conductive paste containing a glass component and a metal is applied to the multilayer body 10 by a method such as dipping. Thereafter, firing is performed to form the base electrode layer. The temperature of the firing at this time is preferably 700°C or more and 900°C or less.

When the multilayer chip before firing and the electrically conductive paste applied to the multilayer chip are fired at the same time, the fired layer is preferably formed by firing a material to which a ceramic material is added instead of a glass component. At this time, as the ceramic material to be added, it is particularly preferable to use the same type of ceramic material as the dielectric layers 20. In this case, an electrically conductive paste is applied to the multilayer chip before firing, and the multilayer chip and the electrically conductive paste applied to the multilayer chip are simultaneously fired to form the multilayer body 10 in which the fired layer is formed.

Thereafter, a plated layer is formed on the surface of the base electrode layer. In the present embodiment, the first plated layer 60A is formed on the surface of the first base electrode layer 50A. Further, the second plated layer 60B is formed on the surface of the second base electrode layer 50B. In the present embodiment, a Ni plated layer and a Sn plated layer are formed as the plated layers. When plating is performed, either electrolytic plating or electroless plating may be employed. However, electroless plating requires pretreatment with a catalyst or the like in order to improve the plating deposition rate, and thus has a disadvantage in that the process becomes complicated. Therefore, in general, electrolytic plating is preferably employed. The Ni plated layer and the Sn plated layer are sequentially formed by barrel plating, for example.

When the base electrode layer is formed with a thin film layer, masking or the like is performed to form a thin film layer as the base electrode layer in a portion where the external electrode is to be formed. The thin film layer is formed by a thin film forming method such as sputtering or vapor deposition. The thin film layer is a layer of 1.0 µm or less on which metal particles are deposited.

When the electrically conductive resin layer is provided as the base electrode layer, the electrically conductive resin layer may be provided to cover the fired layer, or may be provided directly on the multilayer body 10 without providing the fired layer. When the electrically conductive resin layer is provided, an electrically conductive resin paste containing a thermosetting resin and a metal component is applied onto the fired layer or the multilayer body 10, and then heated at a temperature of 250 to 550°C or higher. Thus, the thermosetting resin is thermally cured to form the electrically conductive resin layer. The atmosphere during this heat treatment is preferably an N2 atmosphere. In addition, in order to prevent scattering of the resin and oxidation of various metal components, the oxygen concentration is preferably 100 ppm or less.

The plated layer may be directly provided on the exposed portion of the internal electrode layer 30 of the multilayer body 10 without providing the base electrode layer. In this case, plating is performed on the first end surface LS1 and the second end surface LS2 of the multilayer body 10, such that a plated layer is formed on the exposed portion of the internal electrode layer 30. When plating is performed, either electrolytic plating or electroless plating may be employed. However, electroless plating requires pretreatment with a catalyst or the like in order to improve the plating deposition rate, and thus has a disadvantage in that the process becomes complicated. Therefore, in general, electrolytic plating is preferably employed. As the plating method, barrel plating is preferably employed. If necessary, an upper plated layer formed on the surface of the lower plated layer may be formed by the same method as the lower plated layer.

Next, the multilayer body on which the plated layer is provided is immersed in a hydrophobic agent by using a dipping method or the like, such that a hydrophobic portion is formed on the entire surface of the multilayer body. After the portion where the hydrophilic portion is formed in the multilayer body in which the hydrophobic portion is provided is trimmed with a laser or the like, the trimmed multilayer body is immersed in the hydrophilic agent by using a dipping method or the like, such that the hydrophilic portion is formed only in the portion where the hydrophobic portion is not provided. As the hydrophobic agent, for example, a fluorine-based silane coupling agent can be used. As the hydrophilic agent, for example, a hydroxyl group-containing silane coupling agent can be used.

Alternatively, a multilayer ceramic capacitor 1 of the fourth embodiment to be described later can also be manufactured by forming protruding portions on the first main surface TS1, the second main surface TS2, the first lateral surface WS1, and the second lateral surface WS2 of the multilayer body, and processing the multilayer body into a configuration in which hydrophobic portions are provided on the protruding portions. The protruding portions each having a predetermined thickness are formed by trimming the first main surface TS1, the second main surface TS2, the first lateral surface WS1, and the second lateral surface WS2 of the multilayer body with a laser.

Through such a manufacturing process, the multilayer ceramic capacitor 1 is manufactured.

The configuration of the multilayer body 10 of the multilayer ceramic capacitor 1 is not limited to the configurations shown in FIGS. 1 to 6. For example, the multilayer ceramic capacitor 1 may be a multilayer ceramic capacitor having a two-portion structure, a three-portion structure, or a four-portion structure as shown in FIGS. 8A, 8B, and 8C.

The multilayer ceramic capacitor 1 shown in FIG. 8A is a multilayer ceramic capacitor 1 having a two-portion structure, and includes, as the internal electrode layers 30, floating internal electrode layers 35 that are each not exposed at either the first end surface LS1 or the second end surface LS2, in addition to the first internal electrode layers 33 and the second internal electrode layers 34. The multilayer ceramic capacitor 1 shown in FIG. 8B is a multilayer ceramic capacitor 1 having a three-portion structure including first floating internal electrode layers 35A and second floating internal electrode layers 35B as the floating internal electrode layers 35. The multilayer ceramic capacitor 1 shown in FIG. 8C is a multilayer ceramic capacitor 1 having a four-portion structure including first floating internal electrode layers 35A, second floating internal electrode layers 35B, and third floating internal electrode layers 35C as the floating internal electrode layers 35. As described above, by providing the floating internal electrode layers 35 as the internal electrode layers 30, the multilayer ceramic capacitor 1 has a structure in which the counter electrode portions are divided into a plurality of portions. As a result, a plurality of capacitor components are provided between the counter internal electrode layers 30, and these capacitor components are connected in series. Therefore, the voltage applied to each capacitor component becomes low, and the breakdown voltage of the multilayer ceramic capacitor 1 can be increased. In addition, the multilayer ceramic capacitor 1 of the present embodiment may have a multiple structure of four or more portions.

According to the multilayer ceramic capacitor 1 of the present embodiment, the following advantageous effects are obtained.
(1) The multilayer ceramic capacitor 1 according to the present embodiment includes: the multilayer body 10 including the plurality of dielectric layers 20 that are laminated, the first main surface TS1 and the second main surface TS2 opposed to each other in the height direction T, the first lateral surface WS1 and the second lateral surface WS2 opposed to each other in the width direction W orthogonal to the height direction T, and the first end surface LS1 and the second end surface LS2 opposed to each other in the length direction L orthogonal to the height direction T and the width direction W; the first internal electrode layers 31 that are each on a corresponding one of the plurality of dielectric layers 20 and each exposed at the first end surface LS1; the second internal electrode layers 32 that are each on a corresponding one of the plurality of dielectric layers 20 and each exposed at the second end surface LS2; the first external electrode 40A on the first end surface LS1; and the second external electrode 40B on the second end surface LS2. The multilayer body 10 includes a surface including at least the hydrophilic portion 80 and at least the hydrophobic portion 70. The hydrophilic portion 80 includes the first main surface-side hydrophilic portion 81 that is on at least a portion of the first main surface TS1 and has a hydroxyl group, the second main surface-side hydrophilic portion 82 that is on at least a portion of the second main surface TS2 and has a hydroxyl group, the first lateral surface-side hydrophilic portion 83 that is on at least a portion of the first lateral surface WS1 and has a hydroxyl group, and
   the second lateral surface-side hydrophilic portion 84 that is on at least a portion of the second lateral surface WS2 and has a hydroxyl group. The hydrophobic portion 70 includes the first main surface-side hydrophobic portion 71 that is on at least a portion of the first main surface TS1 and includes at least one of fluorine or silicone, the second main surface-side hydrophobic portion 72 that is on at least a portion of the second main surface TS2 and includes at least one of fluorine or silicone, the first lateral surface-side hydrophobic portion 73 that is on at least a portion of the first lateral surface WS1 and includes at least one of fluorine or silicone, and the second lateral surface-side hydrophobic portion 74 that is on at least a portion of the second lateral surface WS2 and includes at least one of fluorine or silicone. With such a configuration, by providing the hydrophobic portion 70 and the hydrophilic portion 80 on the surface of the multilayer body 10 which is the ceramic element body portion, it is possible to guide the water droplets W generated by dew condensation to the hydrophilic portion 80. Therefore, it is possible to suppress the formation of a water droplet path that bridges between the first external electrode 40A and the second external electrode 40B, and it is possible to more reliably suppress the occurrence of electrochemical migration.
(2) In the multilayer ceramic capacitor according to the present embodiment, the first main surface-side hydrophilic portion 81 and the second main surface-side hydrophilic portion 82 are continuously provided via the first lateral surface-side hydrophilic portion 83, and continuously provided via the second lateral surface-side hydrophilic portion 84, and the first main surface-side hydrophobic portion 71 and the second main surface-side hydrophobic portion 72 are continuously provided via the first lateral surface-side hydrophobic portion 73, and continuously provided via the second lateral surface-side hydrophobic portion 74. With such a configuration, the hydrophilic portion 80 and the hydrophobic portion 70 are continuously provided over the first main surface TS1, the second main surface TS2, the first lateral surface WS1, and the second lateral surface WS2 of the multilayer body 10 such that it is possible to more reliably guide the water droplets W generated by dew condensation to the hydrophilic portion 80. Therefore, it is possible to suppress the formation of a water droplet path that bridges between the first external electrode 40A and the second external electrode 40B.
(3) In the multilayer ceramic capacitor 1 according to the present embodiment, the hydrophilic portion 80 comprises a plurality of hydrophilic portions 80, and the hydrophobic portion 70 is sandwiched by the plurality of hydrophilic portions 80 in the length direction. With such a configuration, the effect of suppressing electrochemical migration becomes more remarkable.

Next, a multilayer ceramic capacitor 1 according to a second embodiment will be described. In the following description, detailed descriptions of configurations that are the same as those of the first embodiment will be omitted. FIG. 9 is a view showing a multilayer ceramic capacitor 1 according to a second embodiment, and corresponds to FIG. 7. FIG. 10 is a diagram of the multilayer ceramic capacitor 1 according to the second embodiment, and is a diagram corresponding to an arrow view when the second main surface TS2 is viewed along the direction of the arrow X shown in FIG. 1.

In the multilayer ceramic capacitor 1 according to the second embodiment, the first main surface-side hydrophobic portion 71 and the second main surface-side hydrophobic portion 72 of the hydrophobic portion 70 and the first main surface-side hydrophilic portion 81 and the second main surface-side hydrophilic portion 82 of the hydrophilic portion 80 are different from those in the above embodiment.

The hydrophobic portion 70 of the second embodiment will be described. The first main surface-side hydrophobic portion 71 extends in the width direction W in the middle portion in the length direction L of the multilayer body 10. As shown in FIG. 9, the first main surface-side hydrophobic portion 71 is provided from the first lateral surface WS1 to the second lateral surface WS2 in the width direction W of the first main surface TS1. The first main surface-side hydrophobic portion 71 includes first width-direction lateral surface portions 711 and a first width-direction middle portion 712.

The first width-direction lateral surface portions 711 are respectively located adjacent to the first lateral surface WS1 and the second lateral surface WS2 in the width direction W of the first main surface TS1. Specifically, the first width-direction lateral surface portions 711 are respectively located at a portion of the first main surface TS1 that intersects the first lateral surface WS1 and a portion of the first main surface TS1 that intersects the second lateral surface WS2.

The first width-direction middle portion 712 is located adjacent to the middle portion in the width direction W on the first main surface TS1. A dimension d1 of the first main surface-side hydrophobic portion 71 in the length direction L increases from the first width-direction lateral surface portions 711 toward the first width-direction middle portion 712. That is, in the first main surface-side hydrophobic portion 71, the dimension d1 in the length direction L increases from the first lateral surface WS1 or the second lateral surface WS2 in the width direction W toward the middle portion in the width direction W on the first main surface TS1.

The second main surface-side hydrophobic portion 72 extends in the width direction W in the middle portion in the length direction L of the multilayer body 10. As shown in FIG. 10, the second main surface-side hydrophobic portion 72 is provided from the first lateral surface WS1 to the second lateral surface WS2 in the width direction W of the second main surface TS2. The second main surface-side hydrophobic portion 72 includes second width-direction lateral surface portions 721 and a second width-direction middle portion 722.

The second width-direction lateral surface portions 721 are respectively located on the first lateral surface WS1 and the second lateral surface WS2 in the width direction W of the second main surface TS2. Specifically, the second width-direction lateral surface portions 721 are respectively located at a portion of the second main surface TS2 that intersects the first lateral surface WS1 and a portion of the second main surface TS2 that intersects the second lateral surface WS2.

The second width-direction middle portion 722 is located adjacent to the middle portion in the width direction W on the second main surface TS2. The dimension d2 of the second main surface-side hydrophobic portion 72 in the length direction L increases from the second width-direction lateral surface portions 721 toward the second width-direction middle portion 722. That is, in the second main surface-side hydrophobic portion 72, the dimension d2 in the length direction L increases from the first lateral surface WS1 or the second lateral surface WS2 in the width direction W toward the middle portion in the width direction W on the second main surface TS2.

The first lateral surface-side hydrophobic portion 73 and the second lateral surface-side hydrophobic portion 74 of the present embodiment have the same configurations as those of the first embodiment, but may have the same configurations as the first main surface-side hydrophobic portion 71 and the second main surface-side hydrophobic portion 72 of the present embodiment. The first main surface-side hydrophobic portion 71 and the second main surface-side hydrophobic portion 72 of the hydrophobic portion 70 of the present embodiment are continuously provided via the first lateral surface-side hydrophobic portion 73, and are continuously provided via the second lateral surface-side hydrophobic portion 74.

The hydrophilic portion 80 of the second embodiment will be described. Two hydrophilic portions 80, i.e., hydrophilic portions 80a and 80b, are provided on the surface of the multilayer body 10.

As shown in FIG. 9, the first main surface-side hydrophilic portion 81 of the hydrophilic portion 80a is provided between the first external electrode 40A and the hydrophobic portion 70 on the first main surface TS1. Specifically, the first main surface-side hydrophilic portion 81 of the hydrophilic portion 80a covers the entire surface of the first main surface TS1 between the first external electrode 40A and the hydrophobic portion 70. Further, the first main surface-side hydrophilic portion 81 of the hydrophilic portion 80b is provided between the hydrophobic portion 70 and the second external electrode 40B on the first main surface TS1. Specifically, the first main surface-side hydrophilic portion 81 of the hydrophilic portion 80b covers the entire surface between the hydrophobic portion 70 and the second external electrode 40B on the first main surface TS1. That is, in the first main surface-side hydrophilic portion 81 of the hydrophilic portions 80a and 80b, each of the dimensions d3 in the length direction L decreases from the first lateral surface WS1 or the second lateral surface WS2 in the width direction W toward the middle portion in the width direction W on the first main surface TS1.

As shown in FIG. 10, the second main surface-side hydrophilic portion 82 of the hydrophilic portion 80a is provided between the first external electrode 40A and the hydrophobic portion 70 on the second main surface TS2. Specifically, the second main surface-side hydrophilic portion 82 of the hydrophilic portion 80a covers the entire surface of the second main surface TS2 between the first external electrode 40A and the hydrophobic portion 70. The second main surface-side hydrophilic portion 82 of the hydrophilic portion 80b is provided between the hydrophobic portion 70 and the second external electrode 40B on the second main surface TS2. Specifically, the second main surface-side hydrophilic portion 82 of the hydrophilic portion 80b covers the entire surface between the hydrophobic portion 70 and the second external electrode 40B on the second main surface TS2. That is, in the second main surface-side hydrophilic portion 82 of the hydrophilic portions 80a and 80b, each of the dimensions d4 in the length direction L decreases from the first lateral surface WS1 or the second lateral surface WS2 in the width direction W toward the middle portion in the width direction W on the second main surface TS2.

The first lateral surface-side hydrophilic portion 83 and the second lateral surface-side hydrophilic portion 84 of the present embodiment have the same configurations as those of the first embodiment, but may have the same configurations as the first main surface-side hydrophilic portion 81 and the second main surface-side hydrophilic portion 82 of the present embodiment. The first main surface-side hydrophilic portion 81 and the second main surface-side hydrophilic portion 82 of the hydrophilic portion 80 of the present embodiment are continuously provided via the first lateral surface-side hydrophilic portion 83, and are continuously provided via the second lateral surface-side hydrophilic portion 84.

According to the multilayer ceramic capacitor 1 of the present embodiment, the following advantageous effects are achieved in addition to the advantageous effects (1) to (3).

(4) In the multilayer ceramic capacitor according to the present embodiment, the first main surface-side hydrophobic portion 71 includes the first width-direction lateral surface portions 711 respectively located adjacent to the first lateral surface WS1 and the second lateral surface WS2 in the width direction W on the first main surface TS1, and the first width direction middle portion 712 located adjacent to the middle portion in the width direction W, and the second main surface-side hydrophobic portion 72 includes the second width direction lateral surface portions 721 respectively located adjacent to the first lateral surface WS1 and the second lateral surface WS2 in the width direction W on the second main surface TS2, and the second width-direction middle portion 722 located adjacent to the middle portion in the width direction W, the first main surface-side hydrophobic portion 71 has a length d1 in the length direction L, in which the length d1 in the length direction L increases from the first width-direction lateral surface portion 711 toward the first width-direction middle portion 712, and the second main surface-side hydrophobic portion 72 has a length d2 in the length direction L, in which the length d2 in the length direction L increases from the second width-direction lateral surface portion 721 toward the second width-direction middle portion 722. With such a configuration, since the dimension d1 of the first main surface-side hydrophobic portion 71 in the length direction L and the dimension d2 of the second main surface-side hydrophobic portion 72 in the length direction L increase toward the middle portion in the width direction W, the water droplets W generated by dew condensation are guided to the hydrophilic portion 80 as shown in FIGS. 9 and 10, and are easily removed from the surface of the multilayer body 10. Therefore, it is possible to more effectively suppress the formation of a water droplet path that bridges between the first external electrode 40A and the second external electrode 40B.

Next, a multilayer ceramic capacitor 1 according to a third embodiment will be described. In the following description, detailed descriptions of the same configurations as those of the first embodiment will be omitted. FIG. 11 is a view showing a multilayer ceramic capacitor 1 according to a third embodiment, and corresponds to FIG. 7.

The multilayer ceramic capacitor 1 according to the third embodiment is different from the multilayer ceramic capacitor 1 according to the first embodiment in the forms of the hydrophobic portion 70 and the hydrophilic portion 80.

A plurality of hydrophobic portions 70 of the third embodiment are provided on the surface of the multilayer body 10. As shown in FIG. 11, between the first external electrode 40A and the second external electrode 40B on the surface of the multilayer body 10, three hydrophobic portions 70a, 70b, and 70c are spaced away from each other in the length direction L. Specifically, as shown in FIG. 11, the hydrophobic portion 70a is provided in the middle portion in the length direction L, the hydrophobic portion 70b is provided between the first external electrode 40A and the hydrophobic portion 70a, and the hydrophobic portion 70c is provided between the hydrophobic portion 70a and the second external electrode 40B. Each hydrophobic portion 70 includes a ring shape as a whole, and is provided over the first main surface TS1, the second main surface TS2, the first lateral surface WS1, and the second lateral surface WS2 of the multilayer body 10.

Each hydrophobic portion 70 includes a first main surface-side hydrophobic portion 71 provided on at least a portion of the first main surface TS1, a second main surface-side hydrophobic portion 72 provided on at least a portion of the second main surface TS2, a first lateral surface-side hydrophobic portion 73 provided on at least a portion of the first lateral surface WS1, and a second lateral surface-side hydrophobic portion 74 provided on at least a portion of the second lateral surface WS2.

As shown in FIG. 11, the first main surface-side hydrophobic portion 71 of the hydrophobic portion 70a extends in a strip shape in the width direction W in the middle portion in the length direction L of the multilayer body 10. The first main surface-side hydrophobic portion 71 extends from an end portion of the first lateral surface WS1 to an end portion of the second lateral surface WS2 in the width direction W on the first main surface TS1. In the present embodiment, the second main surface-side hydrophobic portion 72, the first lateral surface-side hydrophobic portion 73, and the second lateral surface-side hydrophobic portion 74 of the hydrophobic portion 70a extend in a strip shape in the width direction W in the middle portion in the length direction L of the multilayer body 10, similarly to the first main surface-side hydrophobic portion 71. In addition, the first main surface-side hydrophobic portion 71 and the second main surface-side hydrophobic portion 72 of the hydrophobic portion 70a are continuously provided via the first lateral surface-side hydrophobic portion 73, and are continuously provided via the second lateral surface-side hydrophobic portion 74.

As shown in FIG. 11, the first main surface-side hydrophobic portion 71 of the hydrophobic portion 70b extends in a strip shape in the width direction W between the first external electrode 40A and the first main surface-side hydrophobic portion 71 of the hydrophobic portion 70a. The first main surface-side hydrophobic portion 71 of the hydrophobic portion 70b extends substantially parallel to the first main surface-side hydrophobic portion 71 of the hydrophobic portion 70a from an end portion adjacent to the first lateral surface WS1 to an end portion adjacent to the second lateral surface WS2 in the width direction W on the first main surface TS1. The first main surface-side hydrophobic portion 71 of the hydrophobic portion 70b is spaced away from the first external electrode 40A and the hydrophobic portion 70a. In the present embodiment, the second main surface-side hydrophobic portion 72, the first lateral surface-side hydrophobic portion 73, and the second lateral surface-side hydrophobic portion 74 of the hydrophobic portion 70b extend in a strip shape in the width direction W between the first external electrode 40A and the first main surface-side hydrophobic portion 71 of the hydrophobic portion 70a. In addition, the first main surface-side hydrophobic portion 71 and the second main surface-side hydrophobic portion 72 of the hydrophobic portion 70b are continuously provided via the first lateral surface-side hydrophobic portion 73, and are continuously provided via the second lateral surface-side hydrophobic portion 74.

As shown in FIG. 11, the first main surface-side hydrophobic portion 71 of the hydrophobic portion 70c extends in a strip shape in the width direction W between the first main surface-side hydrophobic portion 71 of the hydrophobic portion 70a and the second external electrode 40B. The first main surface-side hydrophobic portion 71 of the hydrophobic portion 70c extends substantially parallel to the first main surface-side hydrophobic portion 71 of the hydrophobic portion 70c from an end portion adjacent to the first lateral surface WS1 to an end portion adjacent to the second lateral surface WS2 in the width direction W on the first main surface TS1. The first main surface-side hydrophobic portion 71 of the hydrophobic portion 70c is spaced away from the hydrophobic portion 70c and the second external electrode 40B. In the present embodiment, the second main surface-side hydrophobic portion 72, the first lateral surface-side hydrophobic portion 73, and the second lateral surface-side hydrophobic portion 74 of the hydrophobic portion 70c extend in a strip shape in the width direction W between the first main surface-side hydrophobic portion 71 and the second external electrode 40B of the hydrophobic portion 70a. In addition, the first main surface-side hydrophobic portion 71 and the second main surface-side hydrophobic portion 72 of the hydrophobic portion 70c are continuously provided via the first lateral surface-side hydrophobic portion 73, and are continuously provided via the second lateral surface-side hydrophobic portion 74.

A plurality of hydrophilic portions 80 of the third embodiment are provided on the surface of the multilayer body 10. As shown in FIG. 11, four hydrophilic portions 80a, 80b, 80c and 80d are spaced away from each other in the length direction L between the first external electrode 40A and the second external electrode 40B on the surface of the multilayer body 10. Specifically, as shown in FIG. 11, the hydrophilic portion 80a is provided between the first external electrode 40A and the hydrophobic portion 70b, the hydrophilic portion 80b is provided between the hydrophobic portion 70b and the hydrophobic portion 70a, the hydrophilic portion 80c is provided between the hydrophobic portion 70a and the hydrophobic portion 70c, and the hydrophilic portion 80d is provided between the hydrophobic portion 70c and the second external electrode 40B. That is, the hydrophobic portions 70 are sandwiched between the hydrophilic portions 80 in the length direction L. Each hydrophilic portion 80 has a ring shape as a whole, and is provided over the first main surface TS1, the second main surface TS2, the first lateral surface WS1, and the second lateral surface WS2 of the multilayer body 10.

Each hydrophilic portion 80 includes a first main surface-side hydrophilic portion 81 provided on at least a portion of the first main surface TS1, a second main surface-side hydrophilic portion 82 provided on at least a portion of the second main surface TS2, a first lateral surface-side hydrophilic portion 83 provided on at least a portion of the first lateral surface WS1, and a second lateral surface-side hydrophilic portion 84 provided on at least a portion of the second lateral surface WS2.

As shown in FIG. 11, the first main surface-side hydrophilic portion 81 of the hydrophilic portion 80a extends in a strip shape in the width direction W between the first external electrode 40A and the hydrophobic portion 70b. Specifically, the first main surface-side hydrophilic portion 81 of the hydrophilic portion 80a covers the entire surface of the first main surface TS1 between the first external electrode 40A and the hydrophobic portion 70b. That is, the first main surface-side hydrophilic portion 81 of the hydrophilic portion 80a is in contact with the first main surface-side hydrophobic portion 71 of the hydrophobic portion 70b. The first main surface-side hydrophilic portion 81 of the hydrophilic portion 80a extends from an end portion adjacent to the first lateral surface WS1 to an end portion adjacent to the second lateral surface WS2 in the width direction W on the first main surface TS1. In the present embodiment, the second main surface-side hydrophilic portion 82, the first lateral surface-side hydrophilic portion 83, and the second lateral surface-side hydrophilic portion 84 of the hydrophilic portion 80a cover the entire surface between the first external electrode 40A and the hydrophobic portion 70b, similarly to the first main surface-side hydrophilic portion 81. In addition, the first main surface-side hydrophilic portion 81 and the second main surface-side hydrophilic portion 82 of the hydrophilic portion 80a are continuously provided via the first lateral surface-side hydrophilic portion 83, and are continuously provided via the second lateral surface-side hydrophilic portion 84.

As shown in FIG. 11, the first main surface-side hydrophilic portion 81 of the hydrophilic portion 80b extends in a strip shape in the width direction W between the hydrophobic portion 70b and the hydrophobic portion 70a. Specifically, the first main surface-side hydrophilic portion 81 of the hydrophilic portion 80b covers the entire surface between the hydrophobic portion 70b and the hydrophobic portion 70a on the first main surface TS1. That is, the first main surface-side hydrophilic portion 81 of the hydrophilic portion 80b is in contact with both the first main surface-side hydrophobic portion 71 of the hydrophobic portion 70a and the first main surface-side hydrophobic portion 71 of the hydrophobic portion 70b. The first main surface-side hydrophilic portion 81 of the hydrophilic portion 80b extends from an end portion adjacent to the first lateral surface WS1 to an end portion adjacent to the second lateral surface WS2 in the width direction W on the first main surface TS1. In the present embodiment, the second main surface-side hydrophilic portion 82, the first lateral surface-side hydrophilic portion 83, and the second lateral surface-side hydrophilic portion 84 of the hydrophilic portion 80b cover the entire surface between the hydrophobic portion 70b and the hydrophobic portion 70a, similarly to the first main surface-side hydrophilic portion 81. In addition, the first main surface-side hydrophilic portion 81 and the second main surface-side hydrophilic portion 82 of the hydrophilic portion 80b are continuously provided via the first lateral surface-side hydrophilic portion 83, and are continuously provided via the second lateral surface-side hydrophilic portion 84.

As shown in FIG. 11, the first main surface-side hydrophilic portion 81 of the hydrophilic portion 80c extends in a strip shape in the width direction W between the hydrophobic portion 70a and the hydrophobic portion 70c. Specifically, the first main surface-side hydrophilic portion 81 of the hydrophilic portion 80c covers the entire surface between the hydrophobic portion 70a and the hydrophobic portion 70c on the first main surface TS1. That is, the first main surface-side hydrophilic portion 81 of the hydrophilic portion 80c is in contact with both the first main surface-side hydrophobic portion 71 of the hydrophobic portion 70a and the first main surface-side hydrophobic portion 71 of the hydrophobic portion 70c. The first main surface-side hydrophilic portion 81 of the hydrophilic portion 80c extends from an end portion adjacent to the first lateral surface WS1 to an end portion adjacent to the second lateral surface WS2 in the width direction W on the first main surface TS1. In the present embodiment, the second main surface-side hydrophilic portion 82, the first lateral surface-side hydrophilic portion 83, and the second lateral surface-side hydrophilic portion 84 of the hydrophilic portion 80c cover the entire surface between the hydrophobic portion 70a and the hydrophobic portion 70c, similarly to the first main surface-side hydrophilic portion 81. In addition, the first main surface-side hydrophilic portion 81 and the second main surface-side hydrophilic portion 82 of the hydrophilic portion 80c are continuously provided via the first lateral surface-side hydrophilic portion 83, and are continuously provided via the second lateral surface-side hydrophilic portion 84.

As shown in FIG. 11, the first main surface-side hydrophilic portion 81 of the hydrophilic portion 80d extends in a strip shape in the width direction W between the hydrophobic portion 70c and the second external electrode 40B. Specifically, the first main surface-side hydrophilic portion 81 of the hydrophilic portion 80d covers the entire surface between the hydrophobic portion 70c and the second external electrode 40B on the first main surface TS1. That is, the first main surface-side hydrophilic portion 81 of the hydrophilic portion 80d is in contact with the first main surface-side hydrophobic portion 71 of the hydrophobic portion 70c. The first main surface-side hydrophilic portion 81 of the hydrophilic portion 80d extends from an end portion adjacent to the first lateral surface WS1 to an end portion adjacent to the second lateral surface WS2 in the width direction W on the first main surface TS1. In the present embodiment, the second main surface-side hydrophilic portion 82, the first lateral surface-side hydrophilic portion 83, and the second lateral surface-side hydrophilic portion 84 of the hydrophilic portion 80d cover the entire surface between the hydrophobic portion 70c and the second external electrode 40B similarly to the first main surface-side hydrophilic portion 81. In addition, the first main surface-side hydrophilic portion 81 and the second main surface-side hydrophilic portion 82 of the hydrophilic portion 80d are continuously provided via the first lateral surface-side hydrophilic portion 83, and are continuously provided via the second lateral surface-side hydrophilic portion 84.

According to the multilayer ceramic capacitor 1 of the present embodiment, the following advantageous effects are achieved in addition to the advantageous effects (1) to (3).

(5) In the multilayer ceramic capacitor 1 according to the present embodiment, the hydrophobic portion 70 comprises a plurality of hydrophobic portions 70. With such a configuration, by adopting a structure in which a plurality of hydrophobic portions 70 are provided, it is possible to guide the water droplets W generated by dew condensation to the hydrophilic portion 80 and to more effectively suppress the formation of a water droplet path that bridges the first external electrode 40A and the second external electrode 40B. In addition, since each of the plurality of hydrophobic portions 70 is sandwiched between the hydrophilic portions 80 in the length direction L, as shown in FIG. 11, it is possible to guide the water droplet W from each hydrophobic portion 70 to the hydrophilic portion 80 and efficiently remove the water droplet W from the surface of the multilayer body 10.

Next, a multilayer ceramic capacitor 1 according to a fourth embodiment will be described. In the following description, detailed descriptions of configurations that are the same as those of the first embodiment will be omitted. FIG. 12 is a diagram of a multilayer ceramic capacitor 1 according to a fourth embodiment, and corresponds to FIG. 7. FIG. 13 is a virtual arrow view when the second end surface LS2 is viewed along a virtual XIII direction of the multilayer ceramic capacitor 1 shown in FIG. 12 in a case where the second external electrode 40B is excluded from the multilayer ceramic capacitor 1. In FIG. 12, the outline of the multilayer body 10 covered with the hydrophobic portion 70, the hydrophilic portion 80, and the external electrode 40 is indicated by a broken line. In FIG. 13, the outline of the multilayer body 10 covered with the hydrophobic portion 70 is indicated by a broken line.

The multilayer ceramic capacitor 1 according to the fourth embodiment differs from the first embodiment in the forms of the multilayer body 10 and the hydrophobic portion 70.

The multilayer body 10 of the present embodiment is different from the multilayer body 10 of the first embodiment in that a first main surface-side protruding portion 91, a second main surface-side protruding portion 92, a first lateral surface-side protruding portion 93, and a second lateral surface-side protruding portion 94 are provided on the surface thereof.

The first main surface-side protruding portion 91 protrudes in a direction away from the multilayer body 10 in the middle portion in the length direction L of the first main surface TS1. The first main surface-side protruding portion 91 continuously extends in the width direction W. The first main surface-side protruding portion 91 is spaced away from the first external electrode 40A and the second external electrode 40B. The first main surface-side protruding portion 91 is provided from an end portion adjacent to the first lateral surface WS1 to an end portion adjacent to the second lateral surface WS2 in the width direction W on the first main surface TS1.

The second main surface-side protruding portion 92 protrudes in a direction away from the multilayer body 10 in the middle portion in the length direction L of the second main surface TS2. The second main surface-side protruding portion 92 continuously extends in the width direction W. The second main-surface-side protruding portion 92 is spaced away from the first external electrode 40A and the second external electrode 40B. The second main surface-side protruding portion 92 is provided from an end portion adjacent to the first lateral surface WS1 to an end portion adjacent to the second lateral surface WS2 in the width direction W on the first main surface TS1.

The first lateral surface-side protruding portion 93 protrudes in a direction away from the multilayer body 10 in the middle portion in the length direction L of the first lateral surface WS1. The first lateral surface-side protruding portion 93 continuously extends in the height direction T. The first lateral surface-side protruding portion 93 is spaced away from the first external electrode 40A and the second external electrode 40B. The first lateral surface-side protruding portion 93 is provided from an end portion adjacent to the first main surface TS1 to an end portion adjacent to the second main surface TS2 in the height direction T on the first lateral surface WS1.

The second lateral surface-side protruding portion 94 protrudes in a direction away from the multilayer body 10 in the middle portion in the length direction L of the first lateral surface WS1. The second lateral surface-side protruding portion 94 continuously extends in the height direction T. The second lateral surface-side protruding portion 94 is spaced away from the first external electrode 40A and the second external electrode 40B. The second lateral surface-side protruding portion 94 is provided from an end portion adjacent to the first main surface TS1 to an end portion adjacent to the second main surface TS2 in the height direction T on the first lateral surface WS1.

In the multilayer body 10 of the present embodiment, as shown in FIG. 13, the first main surface-side protruding portion 91 and the second main surface-side protruding portion 92 are continuously provided via the first lateral surface-side protruding portion 93, and are continuously provided via the second lateral surface-side protruding portion 94.

The hydrophobic portion 70 of the present embodiment includes a first main surface-side hydrophobic portion 71, a second main surface-side hydrophobic portion 72, a first lateral surface-side hydrophobic portion 73, and a second lateral surface-side hydrophobic portion 74.

The first main surface-side hydrophobic portion 71 is provided on the first main surface-side protruding portion 91. Specifically, the first main surface-side hydrophobic portion 71 covers the first main surface-side protruding portion 91. That is, the first main surface-side hydrophobic portion 71 extends in the width direction W in the middle portion in the length direction L of the first main surface TS1. The first main surface-side hydrophobic portion 71 is provided from an end portion adjacent to the first lateral surface WS1 to an end portion adjacent to the second lateral surface WS2 in the width direction W on the first main surface TS1.

The second main surface-side hydrophobic portion 72 is provided on the second main surface-side protruding portion 92. Specifically, the second main surface-side hydrophobic portion 72 covers the second main surface-side protruding portion 92. That is, the second main surface-side hydrophobic portion 72 extends in the width direction W in the middle portion in the length direction L of the second main surface TS2. The second main surface-side hydrophobic portion 72 is provided on the second main surface TS2 from an end portion adjacent to the first lateral surface WS1 to an end portion adjacent to the second lateral surface WS2 in the width direction W.

The first lateral surface-side hydrophobic portion 73 is provided on the first lateral surface-side protruding portion 93. Specifically, the first lateral surface-side hydrophobic portion 73 covers the first lateral surface-side protruding portion 93. That is, the first lateral surface-side hydrophobic portion 73 extends in the height direction T in the middle portion in the length direction L of the first lateral surface WS1. The first lateral surface-side hydrophobic portion 73 is provided from an end portion adjacent to the first main surface TS1 to an end portion adjacent to the second main surface TS2 in the height direction T on the first lateral surface WS1.

The second lateral surface-side hydrophobic portion 74 is provided on the second lateral surface-side protruding portion 94. Specifically, the second lateral surface-side hydrophobic portion 74 covers the second lateral surface-side protruding portion 94. That is, the second lateral surface-side hydrophobic portion 74 extends in the height direction T in the middle portion in the length direction L of the second lateral surface WS2. The second lateral surface-side hydrophobic portion 74 is provided on the second lateral surface WS2 from the end portion adjacent to the first main surface TS1 to the end portion adjacent to the second main surface TS2 in the height direction T.

In the hydrophobic portion 70 of the present embodiment, as shown in FIG. 13, the first main surface-side hydrophobic portion 71 and the second main surface-side hydrophobic portion 72 are provided continuously via the first lateral surface-side hydrophobic portion 73, and are provided continuously via the second lateral surface-side hydrophobic portion 74. That is, the hydrophobic portion 70 has a ring shape as a whole, and is provided over the first main surface TS1, the second main surface TS2, the first lateral surface WS1, and the second lateral surface WS2 of the multilayer body 10.

In the hydrophilic portion 80 of the present embodiment, two hydrophilic portions 80a and 80b are provided similarly to the first embodiment. The hydrophilic portion 80a covers the entire surface between the first external electrode 40A and the hydrophobic portion 70. The hydrophilic portion 80b covers the entire surface between the hydrophobic portion 70 and the second external electrode 40B. That is, the hydrophobic portion 70 is sandwiched between the hydrophilic portions 80 in the length direction L and is in contact with both of the hydrophilic portions 80a and 80b.

According to the multilayer ceramic capacitor 1 of the present embodiment, the following advantageous effects are achieved in addition to the advantageous effects (1) to (3).

(6) In the multilayer ceramic capacitor 1 according to the present embodiment, the multilayer body 10 includes the first main surface-side protruding portion 91 that protrudes in a direction away from the surface of the multilayer body 10 in the middle portion in the length direction L of the first main surface TS1, the second main surface-side protruding portion 92 that protrudes in a direction away from the surface of the multilayer body 10 in the middle portion in the length direction L of the second main surface TS2, the first lateral surface-side protruding portion 93 that protrudes in a direction away from the surface of the multilayer body in the middle portion in the length direction L of the first lateral surface WS1, and the second lateral surface-side protruding portion 94 that protrudes in a direction away from the surface of the multilayer body 10 in the middle portion in the length direction L of the second lateral surface WS2. The first main surface-side protruding portion 91 and the second main surface-side protruding portion 92 are continuously provided via the first lateral surface-side protruding portion 93, and continuously provided via the second lateral surface-side protruding portion 94. The first main surface-side hydrophobic portion 71 is on the first main surface-side protruding portion 91, the second main surface-side hydrophobic portion 72 is on the second main surface-side protruding portion 92, the first lateral surface-side hydrophobic portion 73 is on the first lateral surface-side protruding portion 93, and the second lateral surface-side hydrophobic portion 74 is on the second lateral surface-side protruding portion 94. With such a configuration, the first external electrode 40A and the second external electrode 40B in the length direction L of the multilayer body 10 protrude from the surface of the multilayer body 10 and are partitioned by the portion where the hydrophobic portion 70 is provided. Therefore, it is possible to suppress the formation of a water droplet path that bridges the first external electrode 40A and the second external electrode 40B. In addition, since the hydrophobic portion 70 is sandwiched between the hydrophilic portions 80, it is possible to guide the water droplets W generated by dew condensation to the hydrophilic portions 80 and to more effectively suppress the formation of a water droplet path that bridges the first external electrode 40A and the second external electrode 40B.

The present invention is not limited to the configuration of the above-described embodiments, and can be appropriately modified and applied without changing the gist of the present invention. In addition, combinations of two or more of the individual desirable configurations described in the above embodiments are also included in the present invention.

The multilayer ceramic capacitor 1 of the present invention can also be described as follows.
<1>
   A multilayer ceramic capacitor includes: a multilayer body including a plurality of dielectric layers that are laminated, a first main surface and a second main surface opposed to each other in a height direction, a first lateral surface and a second lateral surface opposed to each other in a width direction orthogonal to the height direction, and a first end surface and a second end surface opposed to each other in a length direction orthogonal to the height direction and the width direction; first internal electrode layers that are each on a corresponding one of the plurality of dielectric layers and each exposed at the first end surface; second internal electrode layers that are each on a corresponding one of the plurality of dielectric layers and each exposed at the second end surface; a first external electrode on the first end surface; and a second external electrode on the second end surface,
   in which the multilayer body includes a surface including at least a hydrophilic portion and at least a hydrophobic portion, in which the hydrophilic portion includes a first main surface-side hydrophilic portion that is on at least a portion of the first main surface and has a hydroxyl group, a second main surface-side hydrophilic portion that is on at least a portion of the second main surface and has a hydroxyl group, a first lateral surface-side hydrophilic portion that is on at least a portion of the first lateral surface and has a hydroxyl group, and a second lateral surface-side hydrophilic portion that is on at least a portion of the second lateral surface and has a hydroxyl group, and in which the hydrophobic portion includes a first main surface-side hydrophobic portion that is on at least a portion of the first main surface and includes at least one of fluorine or silicone, a second main surface-side hydrophobic portion that is on at least a portion of the second main surface and includes at least one of fluorine or silicone, a first lateral surface-side hydrophobic portion that is on at least a portion of the first lateral surface and includes at least one of fluorine or silicone, and a second lateral surface-side hydrophobic portion that is on at least a portion of the second lateral surface and includes at least one of fluorine or silicone.
<2>
   In the multilayer ceramic capacitor as described in <1>, the first main surface-side hydrophilic portion and the second main surface-side hydrophilic portion are continuously provided via the first lateral surface-side hydrophilic portion, and continuously provided via the second lateral surface-side hydrophilic portion, and the first main surface-side hydrophobic portion and the second main surface-side hydrophobic portion are continuously provided via the first lateral surface-side hydrophobic portion, and continuously provided via the second lateral surface-side hydrophobic portion.
<3>
   In the multilayer ceramic capacitor as described in <1> or <2>, the hydrophilic portion comprises a plurality of hydrophilic portions, and the hydrophobic portion is sandwiched by the plurality of hydrophilic portions in the length direction.
<4>
   In the multilayer ceramic capacitor as described in any one of <1> to <3>, the first main surface-side hydrophobic portion includes first width-direction lateral surface portions respectively located adjacent to the first lateral surface and the second lateral surface in the width direction on the first main surface, and a first width-direction middle portion located adjacent to a middle portion in the width direction, and the second main surface-side hydrophobic portion includes second width-direction lateral surface portions respectively located adjacent to the first lateral surface and the second lateral surface in the width direction on the second main surface, and a second width-direction middle portion located adjacent to a middle portion in the width direction, the first main surface-side hydrophobic portion has a length in the length direction, in which the dimension in the length direction increases from the first width-direction lateral surface portion toward the first width-direction middle portion, and the second main surface-side hydrophobic portion has a length in the length direction, in which the length in the length direction increases from the second width-direction lateral surface portion toward the second width-direction middle portion.
<5>
   In the multilayer ceramic capacitor as described in any one of <1> to <4>, the hydrophobic portion comprises a plurality of hydrophobic portions.
<6>
   In the multilayer ceramic capacitor as described in any one of <1> to <5>, the multilayer body includes a first main surface-side protruding portion that protrudes in a direction away from the surface of the multilayer body in a middle portion in the length direction of the first main surface, a second main surface-side protruding portion that protrudes in a direction away from the surface of the multilayer body in a middle portion in the length direction of the second main surface, a first lateral surface-side protruding portion that protrudes in a direction away from the surface of the multilayer body in a middle portion in the length direction of the first lateral surface, and a second lateral surface-side protruding portion that protrudes in a direction away from the surface of the multilayer body in a middle portion in the length direction of the second lateral surface, in which the first main surface-side protruding portion and the second main surface-side protruding portion are continuously provided via the first lateral surface-side protruding portion, and continuously provided via the second lateral surface-side protruding portion, and in which the first main surface-side hydrophobic portion is on the first main surface-side protruding portion, the second main surface-side hydrophobic portion is on the second main surface-side protruding portion, the first lateral surface-side hydrophobic portion is on the first lateral surface-side protruding portion, and the second lateral surface-side hydrophobic portion is on the second lateral surface-side protruding portion.

### EXPLANATION OF REFERENCE NUMERALS

1 multilayer ceramic capacitor
10 multilayer body
11 inner layer portion
12 first main surface-side outer layer portion
13 second main surface-side outer layer portion
20 dielectric layer
31 first internal electrode layer
32 second internal electrode layer
40a first external electrode
40b second external electrode
70, 70a, 70b, 70c hydrophobic portion
71 first main surface-side hydrophobic portion
72 second main surface-side hydrophobic portion
73 first lateral surface-side hydrophobic portion
74 second lateral surface-side hydrophobic portion
80, 80a, 80b, 80c and 80d hydrophilic portion
81 first main surface-side hydrophilic portion
82 second main surface-side hydrophilic portion
83 first lateral surface-side hydrophilic portion
84 second lateral surface-side hydrophilic portion
L length direction
LS1 first end surface
LS2 second end surface
T lamination (stacking) direction
TS1 first main surface
TS2 second main surface
W width direction
WS1 first lateral surface
WS2 second lateral surface

## Claims

1. A multilayer ceramic capacitor comprising:
a multilayer body including a plurality of dielectric layers that are laminated, a first main surface and a second main surface opposed to each other in a height direction, a first lateral surface and a second lateral surface opposed to each other in a width direction orthogonal to the height direction, and a first end surface and a second end surface opposed to each other in a length direction orthogonal to the height direction and the width direction;
first internal electrode layers that are each on a corresponding one of the plurality of dielectric layers and each exposed at the first end surface;
second internal electrode layers that are each on a corresponding one of the plurality of dielectric layers and each exposed at the second end surface;
a first external electrode on the first end surface; and
a second external electrode on the second end surface,
wherein the multilayer body includes a surface including at least a hydrophilic portion and at least a hydrophobic portion,
wherein the hydrophilic portion includes
a first main surface-side hydrophilic portion that is on at least a portion of the first main surface and has a hydroxyl group,
a second main surface-side hydrophilic portion that is on at least a portion of the second main surface and has a hydroxyl group,
a first lateral surface-side hydrophilic portion that is on at least a portion of the first lateral surface and has a hydroxyl group, and
a second lateral surface-side hydrophilic portion that is on at least a portion of the second lateral surface and has a hydroxyl group, and
wherein the hydrophobic portion includes
a first main surface-side hydrophobic portion that is on at least a portion of the first main surface and includes at least one of fluorine or silicone,
a second main surface-side hydrophobic portion that is on at least a portion of the second main surface and includes at least one of fluorine or silicone,
a first lateral surface-side hydrophobic portion that is on at least a portion of the first lateral surface and includes at least one of fluorine or silicone, and
a second lateral surface-side hydrophobic portion that is on at least a portion of the second lateral surface and includes at least one of fluorine or silicone.

2. The multilayer ceramic capacitor according to claim 1, wherein
the first main surface-side hydrophilic portion and the second main surface-side hydrophilic portion are continuously provided via the first lateral surface-side hydrophilic portion, and continuously provided via the second lateral surface-side hydrophilic portion, and
the first main surface-side hydrophobic portion and the second main surface-side hydrophobic portion are continuously provided via the first lateral surface-side hydrophobic portion, and continuously provided via the second lateral surface-side hydrophobic portion.

3. The multilayer ceramic capacitor according to claim 1 or 2, wherein the hydrophilic portion comprises a plurality of hydrophilic portions, and the hydrophobic portion is sandwiched by the plurality of hydrophilic portions in the length direction.

4. The multilayer ceramic capacitor according to any one of claims 1 to 3, wherein
the first main surface-side hydrophobic portion includes first width-direction lateral surface portions respectively located adjacent to the first lateral surface and the second lateral surface in the width direction on the first main surface, and a first width-direction middle portion located adjacent to a middle portion in the width direction, and
the second main surface-side hydrophobic portion includes second width-direction lateral surface portions respectively located adjacent to the first lateral surface and the second lateral surface in the width direction on the second main surface, and a second width-direction middle portion located adjacent to a middle portion in the width direction,
the first main surface-side hydrophobic portion has a length in the length direction, wherein the length in the length direction increases from the first width-direction lateral surface portion toward the first width-direction middle portion, and
the second main surface-side hydrophobic portion has a length in the length direction, wherein the length in the length direction increases from the second width-direction lateral surface portion toward the second width-direction middle portion.

5. The multilayer ceramic capacitor according to any one of claims 1 to 4, wherein the hydrophobic portion comprises a plurality of hydrophobic portions.

6. The multilayer ceramic capacitor according to any one of claims 1 to 5, wherein the multilayer body includes
a first main surface-side protruding portion that protrudes in a direction away from the surface of the multilayer body in a middle portion in the length direction of the first main surface,
a second main surface-side protruding portion that protrudes in a direction away from the surface of the multilayer body in a middle portion in the length direction of the second main surface,
a first lateral surface-side protruding portion that protrudes in a direction away from the surface of the multilayer body in a middle portion in the length direction of the first lateral surface, and
a second lateral surface-side protruding portion that protrudes in a direction away from the surface of the multilayer body in a middle portion in the length direction of the second lateral surface,
wherein the first main surface-side protruding portion and the second main surface-side protruding portion are continuously provided via the first lateral surface-side protruding portion, and continuously provided via the second lateral surface-side protruding portion, and
wherein the first main surface-side hydrophobic portion is on the first main surface-side protruding portion,
the second main surface-side hydrophobic portion is on the second main surface-side protruding portion,
the first lateral surface-side hydrophobic portion is on the first lateral surface-side protruding portion, and
the second lateral surface-side hydrophobic portion is on the second lateral surface-side protruding portion.
